(19) Europäisches Patentamt
European Patent Office
Office européen des brevets

(11)  EP 2 782 880 B1

(12)  **EUROPÄISCHE PATENTSCHRIFT**

(45) Veröffentlichungstag und Bekanntmachung des Hinweises auf die Patenterteilung:
**20.04.2016 Patentblatt 2016/16**

(21) Anmeldenummer: **12794915.4**

(22) Anmeldetag: **22.11.2012**

(51) Int Cl.:
*C03B 37/014* [(2006.01)]     *C03B 19/14* [(2006.01)]

(86) Internationale Anmeldenummer:
**PCT/EP2012/073341**

(87) Internationale Veröffentlichungsnummer:
**WO 2013/076193 (30.05.2013 Gazette 2013/22)**

(54) **VERFAHREN ZUR HERSTELLUNG VON SYNTHETISCHEM QUARZGLAS NACH DER SOOTMETHODE**

METHOD FOR PRODUCING SYNTHETIC QUARTZ GLASS ACCORDING TO THE SOOT METHOD

PROCEDE DE PRODUCTION DE VERRE DE QUARTZ SYNTHETIQUE SELON UN PROCÉDÉ DE SUIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2011 DE 102011119341**
**09.12.2011 US 201161569151 P**

(43) Veröffentlichungstag der Anmeldung:
**01.10.2014 Patentblatt 2014/40**

(73) Patentinhaber: **Heraeus Quarzglas GmbH & Co. KG**
**63450 Hanau (DE)**

(72) Erfinder:
• **FABIAN, Heinz**
**63762 Großostheim (DE)**
• **RÖPER, Jürgen**
**06809 Roitzsch (DE)**

(74) Vertreter: **Staudt, Armin Walter**
**Sandeldamm 24a**
**63450 Hanau (DE)**

(56) Entgegenhaltungen:
EP-A1- 1 329 429      WO-A1-90/10596
WO-A1-2004/065314    US-A- 5 043 002
US-A- 5 735 921      US-A- 5 879 649

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung von synthetischem Quarzglas, umfassend die Verfahrensschritte:

(A) Bereitstellen eines flüssigen $SiO_2$-Einsatzmaterials, welches mehr als 60 Gew.-% des Polyalkylsiloxans D4 aufweist,

(B) Verdampfen des flüssigen $SiO_2$-Einsatzmaterials (105) in einen gasförmigen $SiO_2$-Einsatzdampf (107),

(C) Umsetzen des $SiO_2$-Einsatzdampfes (107) zu $SiO_2$-Partikeln,

(D) Abscheiden der $SiO_2$-Partikel auf einer Ablagerungsfläche (160) unter Bildung eines $SiO_2$-Sootkörpers (200),

(E) Verglasen des $SiO_2$-Sootkörpers unter Bildung des synthetischen Quarzglases.

Stand der Technik

Zur Herstellung von synthetischem Quarzglas für kommerzielle Anwendungen werden aus einer siliziumhaltigen Ausgangssubstanz in einem CVD-Verfahren (chemische Gasphasenabscheidung) durch Hydrolyse und/oder Oxidation $SiO_2$-Partikel erzeugt und diese auf einem Träger niedergeschlagen. Dabei kann zwischen Außenabscheideverfahren und Innenabscheideverfahren unterschieden werden. Bei den Außenabscheideverfahren werden $SiO_2$-Partikel auf der Außenseite eines rotierenden Trägers aufgebracht. Als Beispiele seien das so genannte OVD-Verfahren (outside vapour phase deposition), das VAD-Verfahren (vapour phase axial deposition) oder das PECVD-Verfahren (plasma enhanced chemical vapour deposition) genannt. Als bekanntestes Beispiel für ein Innenabscheideverfahren steht das MCVD-Verfahren (modified chemical vapour deposition), bei dem auf der Innenwandung eines von außen erhitzten Rohres $SiO_2$-Partikel abgeschieden werden.

Bei hinreichend hoher Temperatur im Bereich der Trägeroberfläche kommt es zu einem unmittelbaren Verglasen der $SiO_2$-Partikel ("Direktvergiasen"). Ein Beispiel dafür ist die in der US 5,043,002 beschriebene "Boule-Herstellung". Dabei werden $SiO_2$-Partikel mittels Abscheidebrennern, die von oben in eine rotierende Form gerichtet sind, abgeschieden und direkt verglast, so dass in der Form ein Quarzglaskörper ("Boule") vertikal von unten nach oben aufgebaut wird.

Im Unterschied dazu ist bei dem so genannten "Sootverfahren" die Temperatur während des Abscheidens der $SiO_3$-Partikel so niedrig, dass eine poröse Sootschicht erhalten wird, die in einem separaten Verfahrensschritt zu transparentem Quarzglas gesintert wird. Ein Beispiel dafür ist das aus der DE 10 2007 024 725 A1 bekannte OVD-Verfahren, bei dem einem Abscheidebrenner Brenngase in Form von Wasserstoff und Sauerstoff, sowie eine siliziumhaltige Ausgangsverbindung zugeführt, die in einer dem Abscheidebrenner zugeordneten Brennerflamme zu $SiO_2$-Partikeln umgesetzt wird, welche unter reversierender Bewegung des Abscheidebrenners entlang eines um seine Längsachse rotierenden Trägers schichtweise unter Bildung eines $SiO_2$-Rohlings abgeschieden werden.

Sowohl das Direktverglasen als auch das Sootverfahren führen zu einem dichten, transparenten, hochreinen, synthetischen Quarzglas.

Den genannten Herstellungsverfahren ist infolge des schichtweisen Abscheidens von $SiO_2$-Partikeln die Bildung von Schichtstrukturen inhärent. Diese können sich als so genannte Schlieren bemerkbar machen, die auf Brechzahl-Unterschiede zwischen benachbarten Schichten hinweisen. Dabei kann man grundsätzlich zwischen zylinderförmigen $SiO_2$-Rohlingen mit einer konzentrischen Schichtstruktur und solchen mit einer axialen Schichtstruktur unterscheiden. Beim OVD-Verfahren wird beispielsweise eine Schichtstruktur mit einer im Wesentlichen konzentrisch zur Rohling-Längsachse verlaufenden spiralförmigen Schicht erzeugt, indem auf der Zylindermantelfläche des um seine Längsachse rotierenden Trägers schichtweise $SiO_2$-Partikel abgeschieden werden. Demgegenüber ergibt sich beim VAD-Verfahren, bei dem auf einem scheibenförmigen, rotierenden Träger durch axiale Abscheidung ein $SiO_2$-Vollzylinder in Richtung der ZylinderLängsachse aufgebaut wird, in der Regel eine wendelförmige Schichtstruktur mit axial aufeinander folgenden Schichten, die sich senkrecht zur ZylinderLängsachse erstrecken.

An synthetisches Quarzglas für den Einsatz in der Mikrolithografie oder für optische Bauteile in der Nachrichtentechnik werden hohe Anforderungen an die Brechzahl-Homogenität gestellt. Daher sind zur Beseitigung von Schichten in Quarzglas-Zylindern mehrstufige Verformungsprozesse vorgeschlagen worden, wie beispielsweise in der DE 42 04 406 A1 und der EP 673 888 A1, die ein werkzeugfreies Verfahren zur Homogenisierung eines Schlieren behafteten Quarzglaskörpers durch mehrdimensionales Stauchen und Elongieren einer erweichten Quarzglasmasse beschreibt. Diese Methoden sind wirkungsvoll aber auch zeit- und kostenintensiv.

In der Vergangenheit hat sich als siliziumhaltiges Einsatzmaterial Siliziumtetrachlorid ($SiCl_4$) bewährt. $SiCl_4$ und andere chlorhaltige Substanzen zeigen bei moderaten Temperaturen unter 100 °C bereits hohe Dampfdrücke, so dass etwaige Verunreinigungen in der Flüssigphase verbleiben und die Herstellung von hochreinen Sootkörpern erleichtert wird. Andererseits entsteht bei der Umsetzung von SiCl$_4$ und anderen chlorhaltigen Einsatzmaterialien Salzsäure, die hohe Kosten bei der Abgaswäsche und Entsorgung verursacht.

Es wurde daher eine Vielzahl chlorfreier Einsatzmaterialien für die Quarzglasherstellung erprobt. Als Beispiel seien Monosilane, Alkoxysilane und Siloxane genannt. Eine besonders interessante Gruppe chlorfreier Einsatzmateriäalien bilden die Polyalkylsiloxane (auch kurz als "Siloxane" bezeichnet), die beispielsweise aus der EP 463 045 A1 bekannt sind. Die Stoffgruppe der Siloxane lässt sich unterteilen in offenkettige Polyalkylsiloxane und in geschlossenkettige Polyalkylsiloxane. Die Polyalkylsiloxane haben folgende allgemeine Summenformel Si$_p$O$_p$(R)$_{2P}$, wobei P eine ganze Zahl ≥ 2 ist. Der Rest "R" ist eine Alkylgruppe, im einfachsten Fall eine Methylgruppe.

Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt. Wegen der großtechnischen Verfügbarkeit in hoher Reinheit wird derzeit Octamethylcyclotetrasiloxan (OMCTS) bevorzugt eingesetzt. Diese Substanz wird gemäß einer von General Electric Inc. eingeführten Notation auch als "D4" bezeichnet, wobei "D" die Gruppe [(CH$_3$)$_2$Si]-0- repräsentiert.

Für die Reindarstellung von D4 ist wegen der relativ hohen Siedetemperatur und der chemischen Ähnlichkeit zu anderen Polyalkylcyclosiloxanen wie Hexamethylcyclotrisiloxan (D3), Dekamethylcyclopentasiloxan (D5), Dodekamethylcyclohexasiloxan (D6) und Tetradekamethylcycloheptasiloxan (D7) jedoch eine zeit- und kostenaufwändige Destillationsprozedur erforderlich.

In der US 5,879,649 A geht es um eine derartige Reindarstellung von Polyalkylsiloxanen als Einsatzmaterial für die Quarzglasherstellung. Darin wird ein zweistufiger Destillationsprozess unter Einsatz eines Carbonfilters und eines Molekularsiebes vorgeschlagen, um den Anteil an Verunreinigungen mit Siedetemperaturen oberhalb von 250°C auf einen Anteil von weniger als 14 Gew.-ppm, vorzugsweise auf weniger als 2 Gew.-ppm zu beschränken. Bei diesen hochsiedenden Verunreinigungen handelt es sich typischerweise um Komponenten mit einem mittleren Molekulargewicht von mehr als 500 g/mol, und insbesondere um Tetradekamethylcycloheptasiloxan (D7) mit einem Siedepunkt über 276°C. Es wird berichtet, dass Agglomerate derartiger Hochsieder zu Verstopfungen im Gasversorgungssystem führen und eine "Gelbildung" bewirken, die Defekte im Quarzglas erzeugen. Der Defektmechanismus scheint dabei die Abscheidung von unzersetzten oder nicht vollständig zersetzten Hochsieder-Agglomeraten zu sein, die sich anschließend unter Freisetzung von Gasen zersetzen und zu Blasen im Quarzglas führen können.

Die vorgeschlagene zweistufige Reinigungsmethode ist aufwändig und teuer und es hat sich gezeigt, dass auch bei optimierter Prozessführung Material-Inhomogenitäten, insbesondere in Form dünner Schichten mit erhöhter Dichte im Quarzglas vorkommen.

Alternativ dazu wird in der DE 103 02 914 A1 zur Herstellung von synthetischem Quarzglas mit günstigem Schädigungsverhalten gegenüber kurzwelliger UV-Strahlung vorgeschlagen, als Einsatzmaterial ein Gemisch aus SiCl$_4$ und einer mehrere Si-Atome enthaltenden, oligomeren Siliziumverbindung einzusetzen, wie beispielsweise einem Siloxan.

Das siliziumhaltige Einsatzmaterial kann dem Verbraucher, wie etwa einem Abscheide-brenner, in flüssiger Form zugeführt werden. In der Regel wird das flüssige Einsatzmaterial aber mittels eines Verdampfers in eine gasförmige oder dampfförmige Phase überführt und dem Verbraucher ein kontinuierlicher Gasstrom zugeführt.

Es ist eine große Anzahl von Verdampfern bekannt. Ein bekannter Verdampfer umfasst einen Behälter (einem so genannten "Bubbler"), in dem das flüssige Einsatzmaterial vorgehalten und mittels einer Heizeinrichtung auf eine Temperatur um die Verdampfungstemperatur erhitzt wird. Durch die erhitzte Flüssigkeit wird ein Trägergas geleitet, das dabei mit dem verdampfenden Einsatzmaterial beladen und unter Druck über ein Rohrleitungssystem der Reaktionszone zugeführt wird. Bei dem Trägergas handelt es sich beispielsweise um Sauerstoff. Eine derartige Medienversorgung eines Abscheidebrenners für die Herstellung von synthetischem Quarzglas durch Direktverglasen ist beispielsweise in der EP 908 418 A1 beschrieben.

Die Verdampfungsrate des Einsatzmaterials hängt im Wesentlichen von der Temperatur und von der Verweildauer des Trägergases in der flüssigen Phase ab. Beide Parameter werden durch die Höhe der Flüssigkeitssäule sowie von der Zufuhrrate und die Strömungsgeschwindigkeit des Trägergases beeinflusst. Beispielsweise hat die Größe der Trägergasblasen in der Flüssigkeitssäule Auswirkungen auf deren Steiggeschwindigkeit in der Flüssigkeit und damit auf die Beladung mit dem Einsatzmaterial und auf die Verdampfungsrate. Änderungen in der Flüssigkeitsmenge machen sich auch auf die Wärmeübertragung bemerkbar. Diese komplexen Wechselwirkungen lassen sich am einfachsten dadurch beherrschen, indem laufend flüssiges Einsatzmaterial nachgeliefert wird, so dass der Flüssigkeitspegel im Bubbler nicht sinkt.

Aber selbst bei konstantem Flüssigkeitspegel können sich in der flüssigen Phase unter Bildung eines "Sumpfes" Verunreinigungen mit relativ höherem Siedepunkt allmählich anreichern, so dass sich mit der Zeit die Zusammensetzung des am Abscheidebrenner ankommenden Einsatzmaterials ändert.

Eine zusätzliche Problematik ergibt sich bei Sootabscheideverfahren, bei denen mehrere Verbraucher gleichzeitig mit dem Einsatzmaterial gespeist werden müssen, wie etwa bei der Sootabscheidung mittels Mehrfachbrenner-Anordnung. Um eine unregelmäßige Sootabscheidung und Schichtenbildung zu vermeiden, ist es dabei besonders wichtig, dass jeder Abscheidebrenner quantitativ und qualitativ gleiche Sootaufbau-Charakteristiken hat. Schwankungen in der Gasversorgung der individuellen Abscheidebrenner lassen sich minimieren, indem diese aus einem gemeinsamen Vorratsbehälter über einen "Flussteiler" gespeist werden, wie dies beispielsweise in der DE 195 01 733 A1 beschrieben wird. Dies erfordert jedoch eine aufwändige Infrastruktur der Medienversorgung.

Die erwähnte "Sumpfbildung" vermeidet eine andere Form eines Verdampfers, wie er in der US 5,356,451 A1 beschrieben ist. Bei diesem Verdampfer ist innerhalb einer Verdampfungskammer ein Flüssigkeitsreservoir für das Einsatzmaterial vorgesehen, das sich entlang einer Längsseite der Kammer erstreckt und das kontinuierlich aufgefüllt wird. Überschreitet der Flüssigkeitspegel eine vorgegebene Überfließhöhe, fließt die Flüssigkeit über U-förmige Kanäle aus der längsseitigen Vorratskammer auf eine schiefe Ebene ab und bildet auf dieser einen dünnen Film. Die Kammer wird so beheizt, dass der flüssige Film auf der schiefen Ebene vollständig abgedampft ist, bevor das untere Ende der schiefen Ebene erreicht wird. Auf diese Weise wird gewährleistet, dass die gesamte Flüssigkeit einschließlich aller Verunreinigungen mit höherem Siedepunkt verdampft.

Eine Ausführungsform eines so genannten Vertikalverdampfers ist aus der DE 24 35 704 A1 bekannt. Dort wird vorgeschlagen, die zu verdampfende Flüssigkeit zu erwärmen, einem senkrecht stehenden rotationssymmetrischen Behälter zuzuführen und unter Bildung von Tröpfchen mit einem Durchmesser von weniger als 6 mm radial gegen die Behälterinnenwand zu sprühen und diese dort abzuscheiden. Die dampfförmigen Produkte werden nach oben abgezogen, während sich nicht verdampfte Flüssigkeit im unteren Teil des Behälters ansammelt, von wo sie kontinuierlich oder zeitweise entnommen werden kann.

Das bekannte Verfahren wirkt wie ein zusätzlicher Destillationsschritt beim Verdampfen, wobei schwer flüchtige Bestandteile über den Sumpf abgezogen werden können. Dadurch ergibt sich eine höhere Reinheit des verdampften Anteils des Einsatzmaterials. Ausbeute und Durchsätze sind aber vergleichsweise gering.

Technische Aufgabenstellung

Bei den bekannten Verdampfungssystemen wird die zu verdampfende Flüssigkeit mit einer heißen Oberfläche in Kontakt gebracht. Heiße Oberflächen können insbesondere bei organischem Einsatzmaterial zu unvorhergesehenen Veränderungen führen, wie beispielsweise Zersetzungen oder Polymerisationen, so dass nicht ohne weiteres nachvollziehbar ist, inwieweit die Zusammensetzung des Dampfes noch der der Flüssigkeit entspricht. Daraus ergibt sich eine gewisse Variabilität und Unreproduzierbarkeit in der Prozessführung, die zu Fehlern im Partikelbildungsprozess und zu Inhomogenitäten im Sootaufbau führen kann. Dies macht sich insbesondere dann bemerkbar, wenn es im Partikelbildungsprozess auf exakte Zusammensetzungen von Komponenten ankommt, die untereinander eine hohe chemische Ähnlichkeit haben.

Zudem besteht bei den beschriebenen Verdampfersystemen die Gefahr, dass feinste Flüssigkeitströpfchen mit dem abgeführten Dampfstrom mitgerissen werden, was ebenfalls zu Material-Inhomogenitäten im Sootkörper führen kann.

Im Allgemeinen ist die Struktur eines $SiO_2$-Sootkörpers ausreichend gasdurchlässig, was eine gleichmäßige Gasphasenbehandlung oder Sinterung erleichtert. Im Bereich von Schichten mit höherer Dichte ist dies nur eingeschränkt möglich. Denn die Schichten stellen Diffusionsbarrieren dar, die bei Trocknungs- oder Sinterprozessen ein ungleichmäßiges Behandlungsergebnis verursachen können.

Diese Problematik stellt sich wegen langer Diffusionswege insbesondere bei großvolumigen $SiO_2$-Sootkörpern. Schichtbereiche können insbesondere mit einem lokal erhöhten Gehalt an Hydroxylgruppen und gegebenenfalls an Chlor einhergehen.

Diese Material-Inhomogenitäten des Sootkörpers zeigen sich im daraus hergestellten Quarzglaskörper u. a. in Form axialer, radialer oder azimutaler Variationen der Hydroxyl-gruppen- oder Chlor-Konzentration oder der Viskositätswerte, und führen zu ungünstigen Eigenschaften im Endprodukt.

Es ist die Aufgabe der vorliegenden Erfindung, ein Verfahren zur Herstellung von $SiO_2$-Sootkörpern mit hoher Materialhomogenität zu schaffen, bei dem die genannten Nachteile vermieden werden, insbesondere, ein Verfahren bereitzustellen, dass die Herstellung von $SiO_2$-Söotkörpern mit hoher Materialhomogenität ermöglicht, insbesondere bei großvolumigen, zylinderförmigen Sootkörpern mit Außendurchmessern von mehr als 300 mm.

Allgemeine Beschreibung der Erfindung

Zur Lösung dieser Aufgabe wird ein Verfahren mit den Merkmalen des Patentanspruchs 1 vorgeschlagen. In den abhängigen Ansprüchen sind jeweils bevorzugte Weiterbildungen aufgeführt.

Diese Aufgabe wird ausgehend von dem eingangs genannten Verfahren erfindungsgemäß dadurch gelöst, dass das flüssige $SiO_2$ Einsatzmaterial wenigstens eine Zusatzkomponente aus dem Polyalkylsiloxan Hexamethylcyclotrisiloxan D3 mit einem Gewichtsanteil mD3 und eine Zusatzkomponente aus dem Polyalkylsiloxan Dekamethylcyclopentasiloxan D5 mit einem Gewichtsanteil mD5 in einem Gewichtsverhältnis mD3/mD5 in einem Bereich zwischen 0,01 und 1 aufweist, und das bereitgestellte, flüssige $SiO_2$-Einsatzmaterial unter Beibehaltung des Gewichtsverhältnis mD3/mD5 und zu mindestens 99 Gew.-% in den gasförmigen $SiO_2$-Einsatzdampf verdampft wird.

Im Unterschied zu den bekannten Verfahren, bei denen ein Einsatzmaterial eingesetzt wird, das aus einer einzigen, möglichst reinen und definierten Siliziumverbindung besteht, wird erfindungsgemäß ein $SiO_2$-Einsatzmaterial vorgeschlagen, das als Gemisch unterschiedlicher Polyalkylsiloxane vorliegt. Octamethylcyclotetrasiloxan (hier auch als D4 bezeichnet) bildet die Hauptkomponente des Gemischs. Zusätzlich zu D4 sind chemisch ähnliche Polyalkylsiloxane im Gemisch enthalten, und zwar solche, mit geringerer Molekülmasse als D4 (darunter D3), als auch solche mit höherer Molekülmasse als D4 (darunter D5). Die unter dem Begriff "Zusatzkomponenten" zusammengefassten zusätzlichen Bestandteile des Einsatzmaterials haben somit Molekülmassen und Siedetemperaturen, die sich sowohl nach oben als auch nach unten von der relativen Molekülmasse von D4 (etwa 297 g/mol) und in der Siedetemperatur von D4 (etwa 175°C) unterscheiden.

Im Kern zeichnet sich das erfindungsgemäße Verfahren durch zwei zusammenwirkende Merkmale aus. Das erste Merkmal beinhaltet, dass das flüssige $SiO_2$-Einsatzmaterial - im Folgenden auch als Einsatzmaterial bezeichnet - neben dem vorrangig vorhandenen D4 noch zwei weitere Polyalkylsiloxane aufweist. Es handelt sich dabei um die Zusatzkomponenten D3 und D5. Das Verhältnis der Anteile von D3 und D5 in dem flüssigen $SiO_2$-Einsatzmaterial ist nicht willkürlich, sondern in einem vordefinierten Intervall gewählt. Im Rahmen des zweiten wesentlichen Merkmales fordert das erfindungsgemäße Verfahren eine vollständige Überführung des flüssigen $SiO_2$-Einsatzmaterials - und damit auch der Gewichtsanteil mD3 und mD5 - in die Gasphase. Somit weist nicht nur die Flüssigkeit ein vorbestimmtes und eng eingegrenztes Verhältnis von D3 und D5 auf, sondern auch der gasförmige $SiO_2$-Einsatzdampf - im Folgenden auch als Einsatzdampf bezeichnet. Mittels des erfindungsgemäßen Verfahrens können $SiO_2$-Sootkörper und Quarzglaskörper erstellt werden, die eine besonders hohe Materialhomogenität aufweisen, welche den zurzeit gängigen Standard überschreitet. Es ist möglich die Vorzüge des Verfahrens dadurch zu erklären, dass eine auf mikroskopischer Skala stattfindende stärkere Variation der Größen der erstellten $SiO_2$ Partikel-die Verbreiterung der Partikelgrößenverteilung - in einer Verringerung der Schwankung der makroskopisch gemessenen Dichte innerhalb des $SiO_2$-Sootkörper resultiert.

Im Rahmen der Erfindung beschreibt der Begriff "Gewichtsanteil" eine relative Größe, die sich aus der Masse der jeweiligen Zusatzkomponente im Verhältnis zur Gesamtmasse des flüssigen $SiO_2$-Einsatzmaterials ergibt. Das Gewichtsverhältnis mD3/mD5 der beiden Gewichtsanteile der Zusatzkomponenten ist somit eine dimensionslose Größe, die sich durch Division der beiden relativen Gewichtsanteile bestimmen lässt.

Im Rahmen der Erfindung beschreibt der Begriff Taupunkt die Temperatur, bei der sich ein Gleichgewichtszustand von kondensierender und verdunstender Flüssigkeit einstellt.

Im Rahmen der Erfindung bedeutet die Aussage, dass die Verdampfung "unter Beibehaltung des Gewichtsverhältnisses" erfolgt, dass ein Verhältnis $\tau$ des Gewichtsverhältnis G_liquid = mD3/mD5 des flüssigen $SiO_2$-Einsatzmaterials und des Gewichtsverhältnis G_vapor = mD3/mD5 des gasförmigen $SiO_2$-Einsatzdampfes eine Größe von maximal $\pm$ 500 ppm, bevorzugt maximal $\pm$ 250 ppm, besonders bevorzugt maximal $\pm$ 100 ppm, insbesondere maximal $\pm$ 50 ppm aufweist. Dabei wird das Verhältnis $\tau$ wie folgt berechnet:

$$\tau = (G\_liquid - G\_vapor)/G\_liquid.$$

Folglich sollte das Gewichtsverhältnis, also das Verhältnis des Anteiles D3 zum Anteil D5 nicht durch die Verdampfung derart geändert werden, dass das Verhältnis um mehr als maximal $\pm$ 500 ppm, bevorzugt maximal $\pm$ 250 ppm, besonders bevorzugt maximal $\pm$ 100 ppm verschoben wird.

Im Rahmen der Erfindung bedeutet die Aussage, dass "das flüssige $SiO_2$-Einsatzmaterial zumindest 99 Gewichtsprozent in den gasförmigen $SiO_2$-Einsatzdampf verdampft" wird, dass mindestens 99 Gewichtsprozent des in den Verdampfungsprozess einlaufenden flüssigen $SiO_2$-Einsatzmaterial auch in die Gasphase überführt werden. Es ist Ziel des erfindungsgemäßen Verfahrens, dass eine vollständige Umsetzung des flüssigen Einsatzmaterials in die Gasphase erfolgt. Der so erzielte gasförmige $SiO_2$-Einsatzdampf soll dann mittels Oxidation und/oder Pyrolyse und/oder Hydrolyse zu $SiO_2$-Partikeln umgesetzt werden.

Durch die Bemühung, eine vollständige - also zu mindestens 99 Gewichtsprozent (auch als Gew.-% bezeichnet) - Umsetzung des Einsatzmaterials in den Einsatzdampf zu erreichen, wird auch das Gewichtsverhältnis von D3 zu D5 aus der flüssigen Phase in die Gasphase übertragen. Diese Anstrengungen stellen sicher, dass der $SiO_2$-Einsatzdampf ein vorgegebenes Verhältnis zwischen D3 und D5 aufweist. Denn nur wenn das Gewichtsverhältnis mD3/mD5 in einem vorbestimmten Intervall liegt, ist es möglich $SiO_2$-Sootkörper und damit Quarzglas zu erzeugen, welche sich durch eine besondere Homogenität auszeichnen. Ein willkürlich gemischtes Polyalkylsiloxan-Gemisch, welches Gewichtsanteile von D3 und D5 aufweist, die von dem beanspruchten Bereich abweichen, ermöglicht nicht die Herstellung von Quarzglas mit solcherart herausgehobener Homogenität. Eine besonders bevorzugt Ausführungsvariante zeichnet sich dadurch

aus, dass flüssiges $SiO_2$-Einsatzmaterial bis auf einen verbleibenden Anteil von weniger als 20 parts per million (im Folgende ppm; zu deutsch "Teile von einer Million"), bevorzugt weniger als 10 ppm, besonders bevorzugt weniger als 5 ppm, in den $SiO_2$-Einsatzdampf überführt wird. Diese Ausführungsvariante kann mittels der hier offenbarten Verdampfungsverfahren realisiert werden. Diese Verdampfungsverfahren - insbesondere die Kombination der Verdampfung in Folge eines Druckabfalls und einer Senkung des Taupunktes - ermöglichen es, dass von dem flüssig in den Verdampfer eingebrachten $SiO_2$-Einsatzmaterial nur sehr geringe Anteile (weniger als 20 ppm, bevorzugt weniger als 10 ppm, besonders bevorzugt weniger als 5 ppm) nicht verdampfen. In einzelnen Versuchen konnte der Anteil an nicht verdampftem $SiO_2$-Einsatzmaterial sogar auf weniger als 2,5 ppm reduziert werden.

Im Rahmen der Erfindung umfasst der Begriff Polyalkylsiloxan sowohl lineare als auch zyklische Molekularstrukturen. Allerdings ist es bevorzugt, wenn die Polyalkylsiloxane des $SiO_2$-Einsatzmaterials mindestens drei Polymethylcyclosiloxane aufweisen, ausgewählt aus der Gruppe Hexamethylcyclotrisiloxan (D3), Octamethylcyclotetrasiloxan (D4), Decamethylcyclopentasiloxan (D5), Dodecamethylcyclohexasiloxan (D6). Die Notation D3, D4, D5 entstammt einer von General Electric Inc. eingeführten Notation, bei der "D" die Gruppe $[(CH_3)_2Si]$-O- repräsentiert. In einer bevorzugten Variante ist die Hauptkomponente der Polyalkylsiloxan Basissubstanz D4. So ist der Anteil an D4 der Polyalkylsiloxan Basissubstanz mindestens 70 Gew.-%, insbesondere mindestens 80 Gew.-%, bevorzugt mindestens 90 Gew.-%, besonders bevorzugt mindestens 94 Gew.-%.

Im Rahmen der Erfindung werden die Begriffe Verdünnungsmittel und Trägergas gleichbedeutend verwendet.

Eine Ausgestaltung des Verfahrens zeichnet sich dadurch aus, dass das Verhältnis mD3/mD5 im Bereich zwischen 0,1 und 0,5 liegt. Die durchgeführten Messungen haben überraschenderweise bestätigt, dass nur in einem vergleichsweise schmalen Bereich die Beifügung von D3 und D5 zu dem hauptsächlich aus D4 aufgebauten $SiO_2$-Einsatzmaterial eine signifikante Reduktion der Inhomogenitäten in der Dichte des Quarzglases erzielt. Bei einer Vielzahl von Messungen konnte festgestellt werden, dass insbesondere bei einem Verhältnis der Massen der Zusatzkomponenten mD3 zu mD5 zwischen 0,1 und 0,5 der Sootkörper und damit auch das daraus hergestellte Quarzglas besonders wenig Inhomogenitäten aufwiesen.

Wesentlich beim erfindungsgemäßen Verfahren ist, dass im $SiO_2$-Einsatzmaterial sowohl mindestens eine Zusatzkomponente mit kleinerer relativer Molekülmasse als D4 enthalten ist, als auch mindestens eine Zusatzkomponente mit größerer relativer Molekülmasse. Es wird davon ausgegangen, dass bei der hydrolytischen oder pyrolytischen Zersetzung der Polyalkylsiloxane die Aktivierungsenergie des oxidativen Angriffs beziehungsweise die zur Spaltung notwendige thermische Energie mit steigender Molekülmasse zunimmt. Das mit Zusatzkomponenten angereicherte $SiO_2$-Einsatzmaterial wird einer Reaktionszone in gasförmiger Form zugeführt und dabei durch Oxidation und/oder Hydrolyse und/oder Pyrolyse zu $SiO_2$ zersetzt. Die Reaktionszone ist beispielsweise eine Brennerflamme oder ein Plasma. In der Reaktionszone wird das Polyalkylsiloxan-Molekül schrittweise zu $SiO_2$ oxidativ abgebaut, wobei ein $SiO_2$-Primärpartikel entsteht, an das weitere SiO- oder $SiO_2$-Moleküle aus der Gasphase angelagert werden. Der Anlagerungsprozess endet auf dem Weg durch die Reaktionszone in Richtung auf einer Ablagerungsfläche, sobald das agglomerierte oder aggregierte $SiO_2$-Partikel in eine Zone eintritt, in der keine weiteren unzersetzten Moleküle mehr zur Verfügung stehen.

Diese Spaltungs-, Oxidations- und Anlagerungsprozesse (im Folgenden auch unter dem Begriff "Partikelbildungsprozess" zusammen gefasst) verlaufen je nach Molekülmasse und Größe des Polyalkylsiloxan-Moleküls mit unterschiedlicher Kinetik und unterschiedlichen Temperaturen. Als Folge davon werden in der Reaktionszone Agglomerate und Aggregate unterschiedlicher Größe mit vergleichsweise breiter Partikelgrößenverteilung gebildet. Bei der Nutzung des erfindungsgemäßen Verfahrens verändert sich der Partikelbildungsprozess. Im Vergleich zur Verwendung von reinem D4 ist eine breitere Verteilung der Größen der sich bildenden $SiO_2$-Partikel und damit einhergehend eine Veränderung im Sootkörperaufbau zu beobachten. Eine mögliche Erklärung für die Verbreiterung der Partikelgrößenverteilung ist die, dass sich aufgrund der unterschiedlichen Gasphasenkinetik auch eine unterschiedliche Kinetik in Bezug auf die Bildung von $SiO_2$-Primärpartikeln ergibt, an denen weiteres Wachstum durch Anlagerung weiterer $SiO_2$-Moleküle aus der Gasphase stattfinden kann. Eine andere mögliche Erklärung ist, dass sich bei der Hydrolyse oder Pyrolyse in Abhängigkeit von der Anzahl und Konfiguration der Siliziumatome des Polyalkylsiloxan-Moleküls bereits die Größe der $SiO_2$-Primärpartikel und damit einhergehend auch die Größe der daraus entstehenden $SiO_2$-Partikel und deren Konzentration in der Reaktionszone ändert.

Herstellungsbedingt haben Sootkörper eine gewisse Schichtstruktur, wobei die Schichten Bereiche lokaler Änderungen der Dichte oder der chemischen Zusammensetzung darstellen. Es hat sich gezeigt, dass bei Einsatz eines $SiO_2$-Einsatzmaterials gemäß der Erfindung ein $SiO_2$-Sootkörper mit überraschend hoher Homogenität, insbesondere mit gleichmäßiger und schwacher Ausprägung der Schichtstruktur erhalten wird. Dieser Effekt kann darauf zurückgeführt werden, dass die Verbreiterung der Größenverteilung der gebildeten und sich ablagernden $SiO_2$-Partikel entweder zu einer homogeneren Ablagerung des $SiO_2$-Soots führt als bei monodispersen $SiO_2$-Partikeln, oder dass sie eine gleichmäßigere Verdichtung des $SiO_2$-Soots bei der Sootkörperherstellung oder bei der Verglasung erleichtert.

Dieser Effekt setzt voraus, dass in dem in der Reaktionszone ankommenden Einsatzmaterial Zusatzkomponenten mit Molekülmassen beiderseits der Referenzmolekülmasse von D4 vorhanden sind, idealerweise D3 und D5, beziehungsweise den entsprechenden offenkettigen Homologen. Dabei handelt es sich Moleküle mit ähnlicher Molekülmasse und chemischer Ähnlichkeit zu D4. Diese Moleküle bewirken eine moderate Veränderung der Reaktionszone und des Partikelbildungsprozesses und eine leichte Abflachung der Partikelgrößenverteilung, sofern das Verhältnis mD3/mD5 der Gewichtsanteile von D3 und D5 zwischen 0,01 und 1 liegt. Bei Verhältnissen außerhalb dieser Grenzwerte macht sich die oben beschriebene Vergleichmäßigung des Abscheideprozesses nicht bemerkbar.

Das erfindungsgemäße Verfahren beinhaltet zwei zentrale Forderungen. Zum einen muss das bereitgestellte flüssige $SiO_2$-Einsatzmaterial zu mindestens 99 Gew.-% in die Gasphase überführt werden. Zum anderen muss diese Verdampfung derart ausgestaltet sein, dass das $SiO_2$-Einsatzmaterial unter Beibehaltung des Gewichtsverhältnisses mD3 zu mD5 verdampft. Erfindungsgemäß soll also das Massenverhältnis der beiden Zusatzkomponenten sowohl in der flüssigen als auch in der Gasphase im Wesentlichen übereinstimmen. Dabei hat es sich als vorteilhaft herausgestellt, wenn ein Verhältnis $\tau$ des Gewichtsverhältnis G_liquid=mD3/mD5 des flüssigen $SiO_2$-Einsatzmaterials und des Gewichtsverhältnis G_vapor =mD3/mD5 des gasförmigen $SiO_2$- Einsatzdampfs eine Größe von maximal $\pm$ 500 ppm, bevorzugt maximal $\pm$ 250 ppm, besonders bevorzugt maximal $\pm$ 100 ppm aufweist, wobei das Verhältnis wie folgt berechnet wird: $\tau$= (G_liquid - G_vapor)/G_liquid. Es zeigte sich, dass durch das Hinzufügen zweier weiterer Polyalkylsiloxane D3 und D5 zu der Hauptkomponente D4 des $SiO_2$-Einsatzmaterials eine Verbreiterung der Partikelgrößenverteilung erreicht wird.

Die nach dem Stand der Technik und/oder dem erfindungsgemäßen Verfahren hergestellten Sootkörper können eine Dichte aufweisen, die zwischen 25 bis 32 % der Dichte von Quarzglas beträgt. Die erzielte Dichte ist unter anderem abhängig von dem Abstand der Brenner zu der Ablagerungsfläche, der eingestellten Temperatur, der Stöchiometrie der Gase sowie der Geometrie der Brenner. Durch Variation dieser Faktoren können unterschiedliche Dichteverläufe innerhalb des Sootkörpers zu erstellt werden, wie etwa lineare, ansteigende oder abfallende radiale Dichteverläufe in Sootkörpern. Zur Untersuchung der Dichteverteilungen ermittelt die Anmelderin die lokale Dichte eines Sootkörpers mit bekannten Verfahren an ca. 700 Messpunkten. Dazu werden mittels computertomografischer Verfahren ca. 50 Schnittaufnahmen erstellt, die jeweils einen Schnitt quer zur Längsachse des Sootkörpers zeigen. Zur Bestimmung des radialen Dichteverlaufes werden in jedem der 50 computertomografischen Schnitte jeweils 14, etwa äquidistante Messpunkte aufgenommen. Mittels dieses Verfahrens kann der jeweils radiale Dichteverlauf entlang einer Schnittfläche durch den Sootkörper und auch ein Dichteprofil entlang der Längsachse des Sootkörpers bestimmt werden.

Wie dargelegt erscheint es wahrscheinlich, dass die Nutzung des erfindungsgemäßen $SiO_2$-Einsatzmaterials zu einer Verbreiterung der Partikelgrößenverteilung führt. Unter dem Begriff Partikelgrößenverteilung wird dabei eine Häufigkeitsverteilung verstanden, zur statistischen Beschreibung der Größen der einzelnen $SiO_2$-Partikel. Mathematisch gesehen ist die Häufigkeitsverteilung bzw. die Partikelgrößenverteilung eine Funktion, die zu jedem vorgekommenen Wert angibt, wie häufig dieser Wert vorgekommen ist. Auf molekularer Ebene entstehen $SiO_2$ Agglomerate und Aggregate unterschiedlicher Größe, deren Größenverteilung ein breiteres Intervall abdeckt. Die Größenverteilung der Sootpartikel ist breiter als eine Größenverteilung von $SiO_2$-Sootpartikeln, die aus reinem D4 erstellt werden. Die breitere Partikelgrößenverteilung ermöglicht die Bildung einer gleichmäßigeren Schüttung, da Hohlräume etc. gleichmäßiger gefüllt werden. Dieses resultiert in einer - makroskopisch betrachteten - geringeren Dichteschwankung innerhalb des $SiO_2$-Sootkörpers. Die im Rahmen der 700 Messpunkten bestimmten Dichten spiegeln also das makroskopisch Resultat der mikroskopische breiteren Partikelgrößenverteilung wieder.

Der Mittelwert der Dichte M ergibt sich aus einer Mittelung über alle 50 Messpunkte, deren geometrische Position entlang der Längsachse des Sootkörpers variiert, nicht aber deren geometrischer Abstand zur Mittelachse. Bei durchschnittlichen Sootkörpern werden durch die computertomografischen Verfahren 50 Querschnitte durch den Sootkörper erzeugt, so dass sich der Mittelwert der Dichte aus einer Mittelung von jeweils 50 Dichtemessungen ergibt. Im Allgemeinen sind die Mittelwerte der Dichte jeweils normal verteilt, so dass eine Breite $\sigma$ bestimmt werden kann. Für die Bestimmung des radialen Dichteprofiles werden in jedem der 50 Schnitte jeweils 14 Messpunkte bestimmt, deren radialer Abstand zum Mittelpunkt des Sootkörpers zunimmt. Die Varianz $\delta$ der Breite $\sigma$ des Mittelwertes M beinhaltet somit eine Statistik von 14 Punkten.

Bei Sootkörpern, die eine konstante Dichteverteilung aufweisen bzw. aufweisen sollen, lassen sich aus den so gewonnenen Messdaten der Mittelwert M der Dichte des Sootkörpers sowie die Breite $\sigma$ des Mittelwertes der Dichten über 50 Messungen ermitteln. Die Größe $\sigma$ zeigt somit an, wie stark die Dichte in einem vorbestimmten Abstand von der Ablagerungsfläche entlang der Längsachse des Sootkörpers schwankt. Zusätzlich ist es möglich noch die Varianz $\delta$ der Breite $\sigma$ aus den 14 Messpunkten die zur Aufnahme des radialen Profils bestimmt wurden, zu berechnen.

Um den Stand der Technik mit den erfindungsgemäß durchgeführten Messungen vergleichbar zu machen wurde eine Mehrzahl von Sootkörpern erstellt und vermessen. Es wurde dabei versucht die Randbedingungen wie Abstand zum Brenner, Brennertemperatur und Stöchiometrie möglichst konstant zu halten, da diese große Einflüsse auf die jeweilige Dichte der Sootkörper haben. Es wurden jeweils Sootkörper erstellt, die ein lineares Dichteprofil aufwiesen und eine Dichte zwischen 25 und 32 % der Dichte von Quarzglas erreichten. Bei einer Verwendung von bekannten Verfahren bzw. Materialien ergaben sich die folgenden Messwerte für die Breite $\sigma$ und die Varianz $\delta$ der Dichte des Sootkörpers:

$$\sigma_{StdT} = 0{,}4\ \%$$

und

$$\delta_{StdT} = 0{,}025\ \%.$$

Die Werte sind jeweils angegeben in der relativen Dichte bezogen auf die Dichte von Quarzglas.

Die Nutzung der Zusatzkomponenten D3 und D5 in einem ansonsten dominant aus D4 aufgebauten $SiO_2$-Einsatzmaterial führt zu einer Verbreiterung der Partikelgrößenverteilung. Diese Verbreiterung der Partikelgrößenverteilung führt dazu, dass die Dichteschwankungen in dem Sootkörper an sich kleiner werden. Erstaunlicherweise zeigt es sich auch, dass die Variation der Dichteschwankungen reduziert wurde. Es ergaben sich im Mittel die folgenden Werte für die Breite $\sigma$ und die Varianz $\delta$ der Dichte des Sootkörpers:

$$\sigma_{Inv} = 0{,}37\ \%$$

und

$$\delta_{Inv} = 0{,}023\ \%.$$

Auch hier sind die Werte jeweils angegeben in der relativen Dichte bezogen auf die Dichte von Quarzglas. Die Nutzung des erfindungsgemäßen Verfahrens führt damit zu einer Reduktion der gemessenen Dichtenschwankungen um bis zu 9 %. Erstaunlicherweise reduziert sich auch die Variation der Breite um bis zu 8 %. Diese Reduktion der Variation der Schwankungsbreite der mittleren Dichten resultiert in einem wesentlich homogeneren Quarzglas als es im Stand der Technik bekannt ist.

Eine weitere vorteilhafte Ausgestaltung des erfindungsgemäßen Verfahrens zeichnet sich dadurch aus, dass die Zusatzkomponente D3 und/oder die Zusatzkomponente D5 zwischen 0,5 Gew.-% und 30 Gew.-% eines Gesamtgewichtes des flüssigen $SiO_2$ Einsatzrnaterials stellen, insbesondere die Summe der Gewichtsanteile mD3 + mD5 im Bereich zwischen 1 und 15 Gew.-%, bevorzugt zwischen 1 und 3 Gew.-% liegt. Überraschende Messungen haben gezeigt, dass die Zusatzkomponenten D3 und D5 nicht das $SiO_2$-Einsatzmaterial dominieren müssen. Vielmehr reichen Beimischungen von maximal einem Drittel des Gesamtgewichtes aus, um ein erfindungsgemäß beanspruchtes $SiO_2$-Einsatzmaterial zu erstellen, welches bei seinem Abscheiden als $SiO_2$-Partikel zu einer Verbreiterung der Partikelgröße und damit zu einer gesteigerten Homogenität des so erzeugten Sootkörpers führen. So haben Messungen überraschend gezeigt, dass auch Gewichtsanteile zwischen 1 und 3 Gew.-% der Zusatzkomponenten D3 und D5 ausreichen. Schon diese vergleichsweise geringen Mengen an Zusatzkomponenten D3, D5 bewirken durch die vollständigen Überführung in die Gasphase das etwaige auftretende Dichteschwankungen im Sootkörper durch die unterschiedlichen Partikelgrößen des $SiO_2$-Dampfes überdeckt werden, so dass insgesamt ein wesentlich homogenerer Sootkörper bzw. Quarzglaskörper erstellt wird.

Sootkörper, die nach dem Stand der Technik aufgebaut werden, weisen eine Dichte von 25 bis 32 % bezogen auf die Dichte von Quarzglas auf. Dabei zeigen diese Sootkörper eine relative Schwankung in der Dichte von 3 bis 4 %. Diese Dichteschwankungen setzen sich bei der Verglasung auch in den Quarzglaskörper um. Daraus ergeben sich radiale, azimutale und axiale Variationen der Hydroxylgruppen oder Chlorkonzentrationen, die zu ungünstigen Eigenschaften des Quarzglaszylinders und der daraus produzierten Quarzglasfasern führen können. Das erfindungsgemäße Verfahren zeichnet sich dadurch aus, dass die bekannten Dichteschwankungen im Sootkörpern reduziert werden. Da sich diese Reduktion der Dichteschwankungen auf die Qualität des Quarzglaszylinders direkt auswirkt, wurden entsprechend hochwertigere, homogenere Quarzglaszylinder erstellt. Dieses weist den Vorteil auf, dass bei der späteren Verwendung der Quarzglaszylinder etwa bei der Herstellung von optischen Fasern weniger Ausschuss entsteht.

Viele der Messergebnisse deuten darauf hin, dass die bei der Zersetzung der Polyalkylsiloxane nötige Aktivierungsenergie des Polyalkylsiloxans D3 geringer ist als bei dem D4 und bei dem Polysiloxan D5 größer ist als bei D4. Die Aktivierungsenergie des Polyalkylsiloxans D3 ist geringer, da dieses Molekül eine höhere Ringspannung aufweist. Somit lässt sich der Ring schneller öffnen als bei dem stabileren D4. Im Gegensatz dazu zeichnet es sich ab, dass das Polycyclosiloxan D5 eine höhere Aktivierungsenergie als das D4 benötigt, um eine thermische Spaltung des Moleküls auszulösen. Insgesamt zeigte sich aber, dass die Energiedifferenz zwischen D4 und D3 stärker ist als zwischen D4 und D5. Deshalb und da D3 stärker zu Polymerisationsreaktionen neigt, hat es sich als vorteilhaft herausgestellt, wenn die Menge der Zusatzkomponenten D3 geringer ist als jene der Zusatzkomponente D5. So zeichnet sich eine vorteilhafte Ausführungsvariante des erfindungsgemäßen Verfahrens dadurch aus, dass die Zusatzkomponenten Polyalkylcyclosiloxane und jeweils deren lineare Homologen in folgenden Mengen umfassen:

- Hexamethylcyclotrisiloxan (D3): Gewichtsanteil mD3 im Bereich zwischen 0,02 Gew.-% und 1 Gew.-%,

- Dekamethylcyclopentasiloxan (D5) Gewichtsanteil mD5 im Bereich zwischen 0,5 Gew.-% und 5 Gew.-%.

Im Rahmen von Messungen bestätigte sich überraschend, dass bei Nutzung der oben genannten Mengen an Zusatzkomponenten die Dichteschwankungen innerhalb der Sootkörper weniger als 0,4 % betrugen. Eine weitere Verbesserung der Dichteschwankungen der Sootkörper ergab sich dadurch, dass die Zusatzkomponenten Polyalkylcyclosiloxane und jeweils deren lineare Homologen in folgenden Mengen umfassen:

- Hexamethylcyclotrisiloxan (D3): Gewichtsanteil mD3 im Bereich zwischen 0,02 Gew.-% und 2 Gew.-%,

- Dekamethylcyclopentasiloxan (D5) Gewichtsanteil mD5 im Bereich zwischen 0,5 Gew.-% bis 10 Gew.-%.

Teilweise wurde bei den Messungen noch D6 mit einem Gewichtsanteil $m_{D6}$ im Bereich zwischen 0,01 Gew.-% und 0,75 Gew.-% beigegeben. Dieses fand im Allgemeinen im Austausch mit der entsprechenden Menge D5 statt. Allerdings bewirkt Dodekamethylcyclohexasiloxan (D6) und deren lineare Homologen wegen ihrer großen Molekülmasse im Vergleich zu D4 bereits in geringer Konzentration eine merkliche Veränderung der Reaktionszone und des Partikelbildungsprozesses, so dass der Gewichtsanteil von D6 vorzugsweise nicht mehr als 100 Gew.-ppm beträgt.

Im Rahmen der Erfindung ist es vorgesehen, dass das flüssige $SiO_2$-Einsatzmaterial vollständig in den gasförmigen $SiO_2$-Einsatzdampf überführt wird. Diese vollständige Überführung ist notwendig, damit das Gewichtsverhältnis im mD3/mD5 der beiden Zusatzkomponenten D3 und D5 nicht nur in der flüssigen, sondern auch in der dampfförmigen Phase besteht. Somit ist sichergestellt, dass nicht nur in dem flüssigen $SiO_2$-Einsatzmaterial neben dem Referenzmolekül D4 noch ein leichteres Polyalkylsiloxan und ein schweres Polyalkylsiloxan in einem vorbestimmten Gewichtsverhältnis vorhanden sind, sondern auch in der Gasphase. Durch den hohen Anteil des in die Gasphase überführten flüssigen $SiO_2$-Einsatzmaterials ist sichergestellt, dass das Gewichtsverhältnis mD3/mD5 beibehalten wird. Diese Beibehaltung des Gewichtsverhältnisses mD3/mD5 aus der flüssigen Phase in die Gasphase ist insofern wichtig, als nur eine Beimischung der Zusatzkomponenten D3 und D5 innerhalb des beanspruchten Bereiches zu einer Veränderung der $SiO_2$-Primärpartikel führt, mittels derer die angestrebte Verbreiterung der Partikelgrößenverteilung erreicht werden kann.

Bei den bekannten Verdampfungssystemen wird die zu verdampfende Flüssigkeit mit einer heißen Oberfläche in Kontakt gebracht. Heiße Oberflächen können insbesondere bei organischem Einsatzmaterial zu unvorhergesehenen Veränderungen führen, wie beispielsweise Zersetzungen oder Polymerisationen, so dass nicht ohne weiteres nachvollziehbar ist, inwieweit die Zusammensetzung des Dampfes noch der der Flüssigkeit entspricht. Daraus ergibt sich eine gewisse Variabilität und Unreproduzierbarkeit in der Prozessführung, die zu Fehlern im Partikelbildungsprozess und zu Inhomogenitäten im Sootaufbau führen kann. Dies macht sich insbesondere dann bemerkbar, wenn es im Partikelbildungsprozess auf exakte Zusammensetzungen von Komponenten ankommt, die untereinander eine hohe chemische Ähnlichkeit haben. Zudem besteht bei bekannten Verdampfersystemen die Gefahr, dass feinste Flüssigkeitströpfchen mit dem abgeführten Dampfstrom mitgerissen werden, was ebenfalls zu Material-Inhomogenitäten im Sootkörper führen kann.

Um diese Nachteile zu überwinden, ergibt sich eine weitere vorteilhafte Ausgestaltung des erfindungsgemäßen Verdampfungsprozesses dadurch, dass das Verdampfen die Schritte umfasst:

- Erhitzen des Si02-Einsatzmaterials,
- Einführen des erhitzten SiO2-Einsatzmaterials in eine Expansionskammer, so dass zumindest ein erster Teil des Si02-Einsatzmaterials in Folge eines Druckabfalls verdampft.

Im Rahmen dieser Ausgestaltung findet eine Erhitzung des $SiO_2$-Einsatzmaterials statt. Dabei werden Temperaturen des $SiO_2$-Einsatzmaterials zwischen 150 und 230°C angestrebt. Höhere Temperaturen könnten gegebenenfalls zu einer Polymerisation führen. Als vorteilhaft hat sich die Verwendung eines Flüssig/Flüssig-Heizsystems erwiesen, bei dem das $SiO_2$-Einsatzmaterial mittels einer weiteren Flüssigkeit, wie etwa Öl, erhitzt wird. Durch einen Flüssig-zu-Flüssig Wärmetauscher findet eine gleichmäßige, konstante Erwärmung des $SiO_2$-Einsatzmaterials statt, ohne dass dabei singuläre, heiße Bereiche auftreten, wie dieses etwa bei elektrischen Heizdrähten der Fall ist. Solcher Art singulärer Heizpunkte führen schnell zu Polymerisationsreaktionen, die verhindert werden sollen. Nach dem Erhitzen des $SiO_2$-Einsatzmaterials findet ein Einspritzen dieses erhitzten Materials in die Expansionskammer statt. Innerhalb der Expansionskammer wird das $SiO_2$-Einsatzmaterial in die Gasphase umgesetzt. Als besonders schonend für das $SiO_2$-Einsatz-

material hat es sich herausgestellt, wenn diese Verdampfung in Folge eines Druckabfalles geschieht. Dazu kann beispielsweise das $SiO_2$-Einsatzmaterial als eine überkritische Flüssigkeit erhitzt werden. Nur durch einen entsprechenden Druck innerhalb der Aufheizvorrichtung wird ein Sieden des $SiO_2$-Einsatzmaterials verhindert. Bei der Expansion innerhalb der Expansionskammer entspannt sich das $SiO_2$-Einsatzmaterial derart, dass es in die Gasphase übergeht. Als vorteilhaft haben sich Druckabfälle zwischen 1,8 und 5 bar herausgestellt.

Das erhitzte unter Druck stehende Einsatzmaterial wird durch einen Zuführungskanal in die Expansionskammer eingeführt und dann über einen entsprechenden Sprühkopf vernebelt und/oder zerstäubt. Direkt über der Zerstäuberdüse kann der genannte Druckabfall stattfinden und so für eine schnelle, aber gleichmäßige Überführung des $SiO_2$-Einsatzmaterials in den $SiO_2$-Einsatzdampf Sorge tragen. Vorteilhafterweise ist auch die Expansionskammer selber auf eine Temperatur im Bereich zwischen 150°C und 200°C erhitzt. Zwar soll die Expansionskammer nicht für die Verdampfung sorgen, aber die zur Verfügung gestellte Wärme, welche von den Wänden der Expansionskammer auch in das Innere der Expansionskammer strahlt, unterstützt die Verdampfung in Folge des Druckabfalles.

Das Größenspektrum der Tröpfchen hängen von einer Vielzahl an Einflussgrößen ab. Neben den rheologischen Eigenschaften der Flüssigkeit und der Geometrie der Zerstäubungsdüse ist dies insbesondere die Austrittsgeschwindigkeit der Flüssigkeit aus der Zerstäubungsdüse, die im Wesentlichen von der Druckdifferenz bestimmt wird. Innerhalb des genannten Druckdifferenzbereichs zerfällt der austretende Flüssigkeitsstrahl aufgrund turbulenter Strömung zu feinen Tropfen mit enger Tropfengrößenverteilung.

Eine weitere vorteilhafte Ausgestaltung des erfindungsgemäßen Verdampfungsprozesses ergibt sich dadurch, dass das Verdampfen die Schritte umfasst:

•    Erhitzen des Si02- Einsatzmaterials,

•    Einführen des erhitzten SiO2- Einsatzmaterials in die Expansionskammer,

•    Vermischen des Si02-Einsatzmaterials mit einem erhitzten Verdünnungsmittel, so dass zumindest ein zweiter Teil $SiO_2$-Einsatzmaterials in Folge einer Senkung des Taupunktes verdampft.

Im Rahmen dieser Ausführungsvariante wird zur Verdampfung des Einsatzmaterials ein Verdünnungsmittel genutzt. Vorteilhafterweise handelt es sich bei dem Verdünnungsmittel um ein Trägergas, welches die Expansionskammer durchströmt. Aus diesem Grund wird im Folgenden der Begriff Verdünnungsgas und der Begriff Trägergas als gleichbedeutend angesehen.

Im Rahmen dieser Ausführungsvariante findet ebenfalls ein Erhitzen des $SiO_2$-Einsatzmaterials statt. Wie schon dargelegt, hat es sich als vorteilhaft erwiesen, wenn die Erhitzung mittels eines Wärmetauschers geschieht und zu einer Erhitzung des $SiO_2$-Einsatzmaterials auf eine Temperatur im Bereich von 120 bis 230°C führt. Das $SiO_2$-Einsatzmaterial wird durch eine entsprechende Rohrleitung in die Expansionskammer eingeführt und dort über einen Zerstäuberdüse zerstäubt und/oder versprüht. Um einen möglichst gleichmäßigen Übergang des $SiO_2$-Einsatzmaterials in den $SiO_2$-Einsatzdampf zu erzielen, sollte ein Verdünnungsmittel wie etwa Stickstoff entgegen der Einsprührichtung des $SiO_2$-Einsatzmaterials in die Expansionskammer eingeführt werden. Der zweite Teil des flüssigen $SiO_2$-Einsatzmaterials verdampft beim Eintritt in die Expansionskammer, da der Partialdruck des flüssigen $SiO_2$-Einsatzmaterials in der Kammer vermindert ist und so dessen Taupunkt ebenfalls sinkt. Die Besonderheit dieses Verfahrens besteht darin, dass durch die Senkung des Partialdruckes auch jene Temperatur reduziert wird, bei der das flüssige $SiO_2$-Einsatzmaterial in die Gasphase übertritt. Je nach Menge des zugefügten, erhitzten Trägergases sinkt der Taupunkt des $SiO_2$-Einsatzmaterials um bis zu 30°C. Entsprechend bedarf es keiner so starken Erhitzung des $SiO_2$-Einsatzmaterials im Vorlauf. Als Trägergase bzw. Verdünnungsmittel haben sich neben Stickstoff auch Argon oder Helium bewährt. Hierbei handelt es sich um Gase, die sich in Bezug auf Polyalkylsiloxane inert verhalten, so dass Oxidations-, Polymerisations- oder Zersetzungsreaktionen zwischen der Flüssigkeit und dem Trägergas, insbesondere unter Druck und höherer Temperatur, und damit eine nicht reproduzierbare Veränderung der Zusammensetzung des Einsatzmaterials vermieden werden.

Wie auch bei der oben geschilderten Ausführungsvariante des Verdampfens durch Druckabfall, ermöglicht auch ein Verdampfen durch Senkung des Partialdrucks, dass das Verdampfen des flüssigen $SiO_2$-Einsatzmaterials nicht durch metallische Oberflächen geschieht. Jene metallischen Oberflächen weisen häufig eine nicht homogene Temperaturverteilung auf, so dass es teilweise zu Polymerisationseffekten an den besonders heißen Bereichen kommen kann. Um jene zu verhindern, ist erfindungsgemäß vorgesehen, dass die Verdampfung durch den Partialdruck oder den Druckabfall schon beim Eintritt des $SiO_2$-Einsatzmateriais in die Expansionskammer geschieht, ohne dass die Flüssigkeit an die Innenwände der Expansionskammer gelangt und dort verdampft.

Eine weitere Ausführungsvariante des erfindungsgemäßen Verfahrens zeichnet sich dadurch aus, dass das $SiO_2$-Einsatzmaterial in Folge des Druckabfalls und/oder der Senkung des Partialdruckes zu mindestens 99,95 Gew.-%, besonders bevorzugt 99,9995 Gew.-% in den Si02-Einsatzdampf überführt wird. Bei einer Alternative dieser Ausführungsform findet die Überführung des flüssigen $SiO_2$-Einsatzmaterials in die Gasphase nur durch den Druckabfall beim Eintritt des erhitzten und unter Druck stehenden $SiO_2$-Einsatzmaterials in die Expansionskammer statt. Um hier eine vollständige Umsetzung zu erzielen, hat es sich als vorteilhaft erwiesen, wenn das flüssige $SiO_2$-Einsatzmaterial in sehr feine Tröpfchen zerstäubt wird. Deren mittlerer Durchmesser sollte dabei kleiner als 5 $\mu$m, vorzugsweise weniger als 2 $\mu$m, besonders bevorzugt weniger als 1 $\mu$m aufweisen. So wird das flüssige Einsatzmaterial umgesetzt in eine Wolke von kleinen Tröpfchen, die durch die Expansion als Folge des Druckabfalles gleichmäßig verdampfen können.

Um diese Aufteilung der Flüssigkeit in kleine Tröpfchen zu unterstützen, hat es sich als sinnvoll erwiesen, Ultraschallzerstäuber einzusetzen, welche durch die Einwirkung von Ultraschall zu einer gleichmäßigen und feinen Zerstäubung des $SiO_2$-Einsatzmaterials führen. Im Rahmen der Erfindung bezeichnet Ultraschall einen Schall mit Frequenzen, die oberhalb des vom Menschen wahrgenommenen Bereiches liegen. Das umfasst Frequenzen zwischen 16 kHz und 1,6 GHz. Bei einem Ultraschallzerstäuber wird eine Flüssigkeit ohne Druckapplikation und ohne Erhitzung zerstäubt. So kann eine mit der Flüssigkeit benetzte Piezokeramik mittels einer hochfrequenten Wechselspannung in Schwingungen versetzt werden. In Folge dessen bilden sich in der Flüssigkeit Ultraschallwellen aus, deren Maximalstärke auf einer bestimmten Flüssigkeitshöhe erreicht wird und die das Entstehen eines sogenannten Ultraschallrüssels bewirken. Aus diesem Ultraschallrüssel lösen sich kleine Flüssigkeitströpfchen oder Aerosole, die für die gewünschte Anwendung benutzt werden können. Der Vorteil von Ultraschallzerstäubern besteht in der gleichmäßigen Zerstäubung veränderlicher Volumenströme, dem nahezu konstanten Tropfenspektrum über den gesamten Volumenstrombereich und der geringen Eigengeschwindigkeit der Tropfen, woraus sich eine gute Beeinflussbarkeit des Strahls ergibt. So kann durch Ultraschallzerstäuben reproduzierbar eine enge Tröpfchengrößenverteilung erzeugt werden, was sich auf die Gleichmäßigkeit des Verdampfungsergebnisses positiv auswirkt.

Im Rahmen der zweiten Alternative findet die Umsetzung des flüssigen $SiO_2$-Einsatzmaterials in die Dampfphase ausschließlich durch die Nutzung des Trägergases mit der Folge der Senkung des Partialdruckes statt. Dabei müssen entsprechend ausreichende Mengen des Verdünnungsmittels/Trägergases durch die Expansionskammer hindurch strömen und so für die Verdampfung des flüssigen $SiO_2$-Einsatzmaterials sorgen.

Als dritte Alternative führt diese Ausführungsvariante des erfindungsgemäßen Verfahrens auf, dass die Verdampfung des flüssigen Einsatzmaterials sowohl durch die Nutzung des Druckabfalles als auch durch die Senkung des Partialdruckes geschieht. Diese Variante hat sich als besonders vorteilhaft erwiesen, da zur Erstellung von Quarzglaszylindern mit Durchmessern von bis zum 300 mm große Mengen an flüssigem Material verdampft werden müssen Um die benötigten Materialmengen schonend und gleichmäßig von der flüssigen Phase in die Gasphase umzusetzen, hat es sich als bevorzugt erwiesen, wenn ein zumindest für Teilkomponenten überhitztes $SiO_2$-Einsatzmaterial in die Expansionskammer eingeführt wird und dort durch Druckabfall und mittels der Nutzung eines Verdünnungsmittels in die Gasphase überführt wird. Diese Kombination der Verdampfung in Folge eines Druckabfalls und einer Senkung des Taupunktes ermöglicht es, dass von dem flüssig in den Verdampfer eingebrachten $SiO_2$-Einsatzmaterial nur sehr geringe Anteile (weniger als 20 ppm, bevorzugt weniger als 10 ppm, besonders bevorzugt weniger als 5 ppm) nicht verdampfen. In einzelnen Versuchen konnte der Anteil an nicht verdampften $SiO_2$-Einsatzdampf sogar auf weniger als 2,5 ppm reduziert werden.

Das flüssige $SiO_2$-Einsatzmaterial lässt sich leichter und gleichmäßiger in die Gasphase überführen, wenn die einzelnen zu verdampfenden Mengen jeweils gering sind und eine große Oberfläche aufweisen. Dieses lässt sich am besten dadurch erzielen, dass die Flüssigkeit des $SiO_2$-Einsatzmaterials in feine Tröpfchen zerstäubt wird. Die zerstäubten Tröpfchen können dann über den Druckabfall und/oder die Vermischung mit dem erhitzten Verdünnungsmittel/Trägergas in die Gasphase überführt werden. Es hat sich als günstig erwiesen, wenn der Kontakt der feinen Tröpfchen mit dem heißen Trägergas in einer Kammer erfolgt, die auf einer Temperatur im Bereich von 150°C bis 230°C gehalten wird. Bei einer Temperatur von weniger als 150 °C besteht eine gewisse Gefahr, dass Tröpfchen nicht vollständig verdampfen, so dass Flüssigkeit in die Reaktionszone eingeschleppt wird, was zu Inhomogenitäten im Partikelbildungsprozess und zu Fehlern im Sootkörperaufbau führt, wie etwa Blasen. Bei Temperatur oberhalb von 230°C steigt die Tendenz, dass ansonsten energetisch gehemmte Reaktionen mit unreproduzierbaren und unerwünschten Reaktionsprodukten, insbesondere von Zersetzungen und Polymerisationsreaktionen.

Eine weitere Ausführungsvariante des erfindungsgemäßen Verfahrens zeichnet sich dadurch aus, dass das flüssige $SiO_2$-Einsatzmaterial bei Raumtemperatur unter einem definierten Druck (z. B. zwischen 1 und 5 bar) in einer Zerstäuberdüse in sehr kleine, wenige Mikrometer große Tröpfchen überführt wird. Ein Trägergas (Verdünnungsgas) wird über einen Wärmetauscher zunächst erwärmt und so mit den Tröpfchen vermischt, dass die Verdampfung überwiegend in der Gasphase und nicht an heißen Oberflächen stattfindet. Dieses Verfahren kann so ausgelegt werden, dass es nicht notwendig ist das flüssige $SiO_2$-Einsatzmaterial vorzuwärmen. Bei dieser Variante findet ein Vermischen des Trägergases und des flüssigen $SiO_2$-Einsatzmaterials vor der eigentlichen Zerstäubung ein Tröpfchen statt.

Eine weitere Ausführungsvariante des erfindungsgemäßen Verfahrens zeichnet sich dadurch aus, dass beim Einführen des $SiO_2$-Einsatzmaterials in die Expansionskammer eine Zusammensetzung des $SiO_2$-Einsatzmaterials mittels eines Konzentrationsdetektors gemessen wird. Im Rahmen dieser Ausgestaltung wird die Zusammensetzung, also beispielsweise das Verhältnis D3, D4 und D5 im Rahmen einer Überwachung direkt bei der Expansionskammer durchgeführt. Das zugeführte $SiO_2$-Einsatzmaterial wird dabei mittels des Konzentrationsdetektors, wie etwa eines Gaschromatographens - analysiert. Eine ähnliche Analysestation mit einem Konzentrationsdetektor kann auch am Ausgang der Expansionskammer angeordnet sein und die Zusammensetzung des $SiO_2$-Einsatzdampfes ermitteln. Einer oder beide Detektoren können Teil eines Qualitätsmanagementsystems sein und die gemessene Zusammensetzung an ein Rechnersystem übermitteln, wo die Qualität der zugefügten Materialien und Dämpfe überwacht wird. Diese permanente Überwachung der Zusammensetzung und Gewichtsanteile des $SiO_2$-Einsatzdampfes stellt sicher, dass das erfindungsgemäße Verfahren jederzeit angewandt wird und so Sootkörper aufgebaut werden können, deren Varianz der Dichteschwankungen nur $\delta_{Inv}$ = 0,023 % betragen. Aus solcher Art aufgebauter Sootkörper können dann durch Verglasung extrem homogene synthetische Quarzgläser hergestellt werden.

Eine weitere Ausführungsvariante des erfindungsgemäßen Verfahrens zeichnet sich dadurch aus, dass das Bilden des Stroms des $SiO_2$-Einsatzmaterials gemäß Verfahrensschritt (B) ein Erzeugen eines ersten Gasstroms durch Verdampfen einer Mischung von Polyalkylsiloxanen umfasst, die reines D4 enthält, und ein Erzeugen eines zweiten Gasstroms durch Verdampfen einer zweiten Mischung von Polyalkylsiloxanen, die im Wesentlichen D3, D4 und D5 enthält, sowie ein Zusammenführen der Gasströme vor oder während Verfahrensschritt (C). Im Rahmen dieser Ausführungsvariante werden die einzelnen Komponenten des flüssigen $SiO_2$-Einsatzmaterials individuell verdampft. So findet zum einen eine Verdampfung des vorrangig aus D4 bestehenden Grundmaterials des $SiO_2$-Einsatzmaterials statt, wobei parallel dazu eine zweite Mischung von Polysiloxan verdampft wird, die die beiden Zusatzkomponenten D3 und D5 in ausreichender Menge enthält. Anschließend werden die beiden separaten erzeugten Gasströme zusammengeführt, um jene dann in $SiO_2$-Partikel durch Oxidation und/oder Pyrolyse und/oder Hydrolyse umzusetzen. Mittels eines entsprechenden Konzentrationsdetektor kann überprüft und gewährleistet werden, dass die Zusammensetzung des $SiO_2$-Einsatzdampfes aus den erzeugten zwei Gasströmen jeweils dem gewünschten Gewichtsanteil mD3/mD5 innerhalb des gasförmigen $SiO_2$-Einsatzdampfes aufweist. Die Verdampfung der beiden Teilkomponenten des $SiO_2$-Einsatzmaterials kann dabei durch unterschiedliche Verfahren und/oder bei individuellen Temperaturen geschehen.

Das flüssige $SiO_2$-Einsatzmaterial kann durch Mischen der Einzelkomponenten oder durch Verschnitt von Komponentenmischungen erzeugt werden, oder durch vorzeitige Entnahme aus einer Destillationskolonne oder vorzeitigen Abbruch einer Destillation, wie sie ansonsten zur Reinstdarstellung von Octamethylcyclotetrasiloxan üblich ist. Somit kann beim erfindungsgemäßen Verfahren auf eine Reinstdarstellung von Octamethylcyclotetrasiloxan verzichtet und stattdessen eine weniger reine und daher auch preiswertere D4-Qualität eingesetzt werden. Die ähnlichen Dichten und Eigenschaften der Polyalkylsiloxane des Einsatzmaterials wirken einer Entmischung entgegen.

Die obigen Grenzwerte für das Verhältnis mD3/mD5 der Gewichtsanteile von D3 und D5 bezeichnen die Zusammensetzung des Einsatzmaterials in seiner flüssigen Phase. Beim Übergang in die Gasphase kann sich die Zusammensetzung des Einsatzmaterials durch Zersetzung, Polymerisation oder Destillation jedoch verändern. Um diesen Effekt zu vermeiden oder möglichst gering zu halten, wird erfindungsgemäß eine Verdampfungsmethode eingesetzt, bei der das flüssige $SiO_2$-Einsatzmaterials zunächst unter Druck mittels eines Injektors in feine Tröpfchen zerstäubt wird, und die feinen Tröpfchen ohne Kontakt mit festen, insbesondere metallischen Oberflächen überwiegend durch Kontakt mit einem heißen Trägergas vollständig verdampft werden.

Die feinen Tröpfchen stellen eine große Oberfläche bereit, die ein schnelles und effizientes - also energiesparendes - und insbesondere ein vollständiges Verdampfen des flüssigen Einsatzmaterials ermöglicht. Auf diese Weise sollten insbesondere Veränderungen der Zusammensetzung durch Zersetzung, Polymerisation oder Destillation weitgehend vermieden und eine definierte Zusammensetzung des dem Verbraucher zugeführten Einsatzmaterials und ein reproduzierbarer Partikelbildungsprozess gewährleistet werden.

Die erfindungsgemäße Kombination von Bereitstellung einer auf die homogene Sootbildung optimierten Zusammensetzung des $SiO_2$-Einsatzmaterials einerseits und deren Aufrechterhaltung beim Verdampfen und der Zufuhr zur Reaktionszone andererseits führt zu einem Sootkörper, aus dem durch Sintern oder Verglasen ein Quarzglas erhalten wird, das sich durch hohe Materialhomogenität und Strahlenbeständigkeit auszeichnet.

Die hier offenbarten Verfahren weisen die folgenden Vorteile gegenüber herkömmlich bekannten Verfahren auf: (1) die Festlegung der verschiedenen Anteile der Polyalkylsiloxane, um so ein Verbreiterung der Partikelgrößenverteilung zu erreichen; (2) eine Vereinfachung des Verdampfungsprozesses, da erfindungsgemäß auf eine vollständige Umsetzung des flüssigen Einsatzmaterials in den gasförmigen $SiO_2$-Einsatzdampf abgezielt wird und (3) die Fähigkeit, die Verdampfungstemperatur durch Zugabe eines Verdünnungsgases während des Verdampfungsprozesses beträchtlich zu vermindern, um so eine alle Fraktionen des Einsatzmaterials, ohne temperaturbedingte chemische Reaktionen in die Gasphase zu überführen.

Ausführungsbeispiel

Weitere Vorteile, Merkmale und Einzelheiten der Erfindung ergeben sich aus den Unteransprüchen und der nachfolgenden Beschreibung, in der unter Bezugnahme auf die Zeichnungen ein Ausführungsbeispiel der Erfindung im Einzelnen beschrieben sind. Dabei können die in den Ansprüchen und der Beschreibung erwähnten Merkmale jeweils einzeln für sich oder in beliebiger Kombination erfindungswesentlich sein. Es zeigen:

**Figur 1**     eine Vorrichtung zur Durchführung des erfindungsgemäßen Verfahrens zur Herstellung eines $SiO_2$-Sootkörpers in schematischer Darstellung,

**Figur 2**     eine qualitative Analyse von Ringstrukturen in Sootkörpern in Abhängigkeit von der Zusammensetzung des Einsatzmaterials in Form eines Diagramms,

**Figur 3**     eine computertomographische Aufnahme eines erfindungsgemäß unter Einsatz eines Einsatzmaterials aus unterschiedlichen Polyalkylsiloxanen hergestellten Sootrohres in einer Ansicht in Richtung der Sootrohr-Längsachse,

**Figur 4**     zum Vergleich, eine computertomographische Aufnahme eines anhand des Standes der Technik unter Einsatz eines reinen Octamethylcyclotetrasiloxans als Einsatzmaterial hergestellten $SiO_2$-Sootrohres,

**Figur 5**     ein schematisches Diagramm der verschiedenen Elemente des erfindungsgemäßen Quarzglasherstellungssystems und

**Figur 6**     eine schematische Darstellung einer Verdampfungskammer.

Im Stand der Technik ist bekannt, das Polyalkylsiloxan Octamethylcyclotetrasiloxan (D4) zur Herstellung von Quarzglas zu nutzen. Mit den bekannten Herstellungsverfahren lassen sich allerdings nur synthetische Quarzgläser herstellen, die eine gewisse Schichtstruktur aufweisen. Einer der Zielpunkte dieser Erfindung ist es, jenen Nachteil - die Bereiche lokaler Änderungen der Dichte und/oder der chemischen Zusammensetzung - zu überwinden. Der Ausgangspunkt des erfindungsgemäßen Verfahrens ist dabei die Bildung eines Gasstromes aus einem $SiO_2$-Einsatzdampf 107, der als Hauptkomponente D4 enthält. Diesem Polyalkylsiloxan ist eine Referenzmolekülmasse zugeordnet. Der Gasstrom wird einer Reaktionszone zugeführt, in der der $SiO_2$-Einsatzdampf unter Bildung amorpher $SiO_2$-Partikel durch Pyrolyse, Oxidation oder Hydrolyse zu $SiO_2$ umgesetzt wird. Das sich anschließende Abscheiden der amorphen $SiO_2$-Partikel auf einer Ablagerungsfläche 160 führt zur Bildung eines porösen $SiO_2$-Sootkörpers 200, der durch Verglasung ein synthetisches Quarzglas bildet. Um dabei die Herstellung von großvolumigen zylinderförmigen Sootkörpern 200 mit Außendurchmessern von mehr als 300 mm mit verbesserter Materialhomogenität zu ermöglichen, offenbart die Erfindung, dass das Ausgangsmaterial D4 wenigstens zwei Zusatzkomponenten in Form weiterer Polyalkylsiloxane aufweist. Es handelt sich aber dabei nicht um willkürliche Polysiloxane, sondern um ein Polysiloxan mit einer Molekülmasse, die geringer ist als jene, der Referenzmolekülmasse von D4, sowie einem Polysiloxan, welches eine Molekülmasse aufweist, die größer ist als die der Referenzmolekülmasse von D4. Überraschenderweise zeigten Messungen, dass durch die Nutzung eines schwereren sowie eines leichteren Polyalkylsiloxans in Verbindung mit dem Basismaterial D4 eine Verbreiterung der Partikelgrößenverteilung der $SiO_2$-Primärpartikel auftritt. Zusätzlich ist die Schwankung der Breite der Partikelgrößenverteilung geringer als bei vergleichbaren Verfahren zur Herstellung von synthetischem Quarzglas, die etwa ausschließlich D4 oder SiCl4 nutzen.

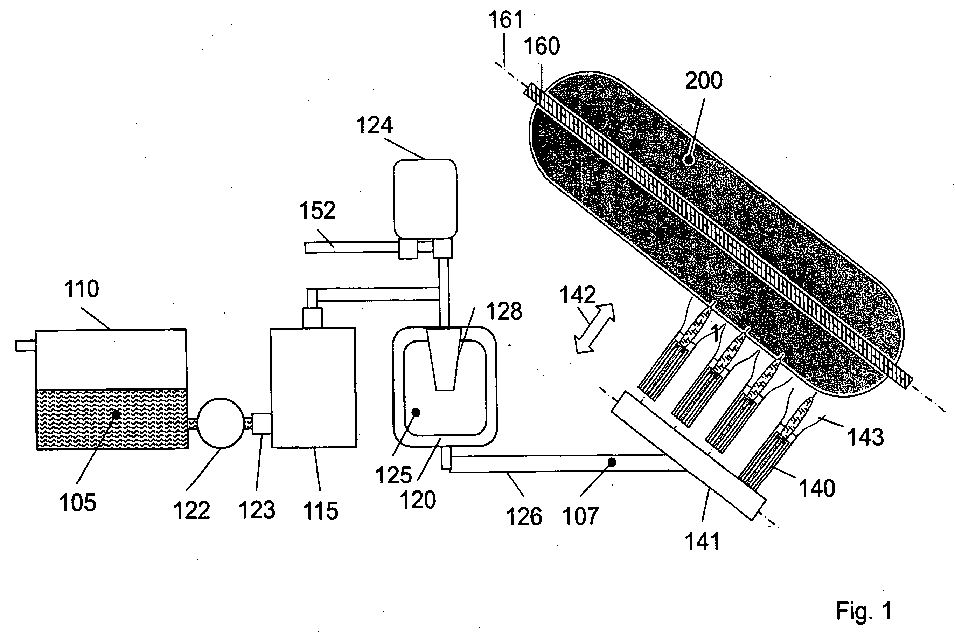

Die in **Figur 1** dargestellte Vorrichtung dient zur Herstellung eines $SiO_2$-Sootkörpers 200. Entlang eines Trägerrohres 160 aus Aluminiumoxid ist eine Vielzahl in einer Reihe angeordneter Flammhydrolysebrenner 140 angeordnet. Bei einer auf höhere Produktivität abzielenden Verfahrensabwandlung wird anstelle nur eines Brenners 140 eine Vielzahl von Abscheidebrennern eingesetzt, die zur Soot-Abscheidung in einer gemeinsamen Brennerreihe entlang des rotierenden Trägers reversierend hin- und herbewegt werden, wobei jede der Brennerflammen nur eine Teillänge des Trägerrohres 160 überstreicht.

Das erfindungsgemäß mit Zusatzkomponenten angereicherte $SiO_2$-Einsatzmaterial 105 wird der Reaktionszone in gasförmiger Form zugeführt und dabei durch Oxidation und/oder Hydrolyse und/oder Pyrolyse zu $SiO_2$ zersetzt. Die Reaktionszone ist beispielsweise eine Brennerflamme oder ein Plasma. In der Reaktionszone entstehen $SiO_2$-Partikel 148, die unter Bildung des $SiO_2$-Sootkörpers auf der Ablagerungsfläche 160 schichtweise niedergeschlagen werden. Die $SiO_2$-Partikel 148 selbst liegen in Form von Agglomeraten oder Aggregaten von $SiO_2$-Primärpartikeln mit Partikelgrößen im Nanometerbereich vor.

Die Flammhydrolysebrenner 140 sind auf einem gemeinsamen Brennerblock 141 montiert, der parallel zur Längsachse 161 des Trägerrohrs 160 zwischen zwei, in Bezug auf die Längsachse 161 ortsfesten Wendepunkten hin- und herbewegt wird und der senkrecht dazu verschiebbar ist, wie dies die Richtungspfeile 142 andeuten. Die Brenner 140 bestehen aus Quarzglas; ihr Mittenabstand zueinander beträgt 15 cm.

Den Flammhydrolysebrennern 140 ist jeweils eine Brennerflamme 143 zugeordnet, die eine Reaktionszone im Sinne der Erfindung darstellt. In ihr werden $SiO_2$-Partikel gebildet und auf der Zylindermantelfläche des um seine Längsachse 161 rotierenden Trägerrohrs 160 abgeschieden, so dass schichtweise ein Sootkörper 6 mit einem Außendurchmesser von 350 mm aufgebaut wird. Während des Abscheideprozesses stellt sich auf der Sootkörperoberfläche 200 eine Temperatur von etwa 1200°C ein.

Den Flammhydrolysebrennern 140 werden jeweils als Brennergase Sauerstoff und Wasserstoff zugeführt sowie als Einsatzmaterial für die Bildung der $SiO_2$-Partikel der $SiO_2$-Einsatzdampf 107, der ein Gemisch aus verdampften Polyalkylsiloxanen mit der aus **Tabelle 1** ersichtlichen Zusammensetzung enthält. Im Rahmen der Erfindung umfasst der Begriff Polyalkylsiloxane sowohl Polyalkylcyclosiloxane als auch deren lineare Homologe.

Die Herstellung des $SiO_2$-Einsatzdampfes 107 mit dem Polyalkylsiloxan-Gemisch erfolgt mittels eines Verdampfersystems 120, das einen Vorratsbehälter 110 für das flüssige Gemisch, eine Flüssigkeitspumpe 122, ein Durchflussmessgerät 123 für Flüssigkeit, einen MFC (mass flow controller) 124 für die geregelte Zufuhr eines Stickstoff-Trägergasstroms 152 und eine doppelwandige, beheizbare Verdampfungskammer 125 mit einem Zerstäuber 128 umfasst. Der Vorratsbehälter 110, eine Pumpe 122 und ein Zerstäuber 128 sind mittels flexibler metallischer Leitungen miteinander verbunden. Der Vorratsbehälter 110 wird auf eine Temperatur von 170°C erhitzt, und die erhitzte Flüssigkeit mittels der Pumpe 122 über das Durchflussmessgerät 123 in exakter Dosierung dem Zerstäuber 128 zugeführt. Dabei kann in der Verbindungsleitung zwischen Durchflussmessgerät 123 und Zerstäuber 128 ein Konzentrationsdetektor zur Überwachung der Zusammensetzung des $SiO_2$-Einsatzmaterials 105 und/oder des $SiO_2$-Einsatzdampfes 107 vorgesehen sein.

Bei dem Zerstäuber 128 - auch als Zerstäuberdüse bezeichnet - kann es sich um einen Ultraschallzerstäuber handeln. Diesem werden gleichzeitig ein Stickstoff-Trägergasstrom über den MFC 123 mit einem Druck von 1,5 bar bis 5 bar und die zu verdampfende Flüssigkeit zugeführt. Diese wird in feine Tröpfchen mit einem maximalen Durchmesser von 1 $\mu$m und schmaler Tröpfchengrößenverteilung mit einem mittleren Durchmesser ($d_{50}$-Wert) von 0,7 $\mu$m zerstäubt und dabei unmittelbar in den Verdampfer 120 eingesprüht. Der Verdampfer 120 hat eine Innentemperatur von 195°C, so dass die feinen Flüssigkeitstöpfchen unmittelbar verdampfen und der Dampfstrom einem ortsfesten Flussteiler zugeführt und von diesem über wärmeisolierte flexible Medienzufuhrleitungen auf die einzelnen Abscheidebrenner 140 aufgeteilt wird.

In den Flussteiler münden auch eine Zufuhrleitung für die Brenngase Sauerstoff und Wasserstoff sowie eines Hilfsgases (Sauerstoff), das in der Brennerflamme 143 zwischen dem Strom des Einsatzmaterials und dem Strom des Brenngases eingesetzt wird, und das einer frühzeitigen Durchmischung entgegenwirkt. Die Mischung von Brenngasen und dem $SiO_2$-Einsatzdampf 107 erfolgt somit erst in der heißen Zone der Brennerflamme 143. Nach Abschluss des Abscheideprozesses wird ein Rohr aus porösem $SiO_2$-Soot (Sootrohr) erhalten, das einer computertomographischen Untersuchung (CT-Untersuchung) unterzogen wird. Dabei wird das Sootrohr 200 über seine Länge mit Röntgenstrahlen durchstrahlt. Die so gewonnenen Aufnahmen lassen quantitative und qualitative Aussagen über die Intensität und die Homogenität der axialen und radialen Schichtstruktur des Sootrohres 200 zu.

**Tabelle 1**

| Nr. | mD3 | mD5 | mD3+mD5 | mD3/mD5 | "S" |
|---|---|---|---|---|---|
| 1 | 500 | 50.000 | 50.500 | 0,01 | 0 |
| 2 | 4.600 | 46.000 | 50.600 | 0,1 | ++ |
| 3 | 16.000 | 32.000 | 48.000 | 0,5 | ++ |
| 4 | 25.300 | 25.300 | 50.600 | 1 | ++ |
| 5 | 10.000 | 10.000 | 20.000 | 1 | + |
| 6 | 500 | 500 | 1000 | 1 | 0 |
| 7 | 46.000 | 4.600 | 50.600 | 10 | - |
| 8 | 48.000 | 2.400 | 50.400 | 20 | - |
| 9 | 49.000 | 500 | 49.500 | 100 | -- |

In Tabelle 1 sind unterschiedlichen Zusammensetzungen des flüssigen $SiO_2$-Einsatzmaterials aufgelistet, die im Rahmen einer Mehrzahl von Experimenten untersucht wurden sowie die Qualitätsergebnisse, die an dem jeweiligen Sootrohr ermittelte wurden. Das $SiO_2$-Einsatzmaterial bestand hauptsächlich aus D4, dem durch die Art der Destillation und/oder durch Zumischung von Polyalkylsiloxanen zu dem hochreinen, handelsüblichen Octamethylcyclotetrasiloxan (D4) erhalten und/oder weitere Hinzufügung von Destillatnebenprodukten, die entsprechenden Mengen an D3 und D5 beigemischt wurden. Sonstige Verunreinigungen, wie schwere Polyalkylsiloxane, wie insbesondere D6, D7, D8, waren maximal mit einer Menge von 500 ppm Teil des flüssigen $SiO_2$-Einsatzmaterials. Wie deutlich zu erkennen sind, führen Beimischungen von D5 und D3 mit einem Gewichtsverhältnis mD3/mD5 in einem Bereich zwischen 0,01 und 1, insbesondere zwischen 0,1 und 1 zu homogenen Sootkörpern bzw. Quarzgläsern. Ein Über- oder Unterschreiten der beanspruchten Gewichtsverhältnisse führt dazu, dass die Anzahl der Inhomogenitäten steigt und damit die Qualität des synthetischen Quarzglases sinkt. So zeigen die qualitativen Ergebnisse von Tabelle 1, dass bei Verwendung eines Einsatzmaterials in Form einer Mischung, die neben D4 einen geeigneten Mengenanteil an den Polyalkylcyclosiloxanen D3 und D5 enthält, ein Quarzglas auf wirtschaftliche Art und Weise erhalten wird, das eine gleichmäßige Schichtstruktur mit geringer Schichtausprägung aufweist.

Alle Konzentrationsangaben der Polyalkylsiloxane in Tabelle 1 sind in Gew.-ppm, wobei der restliche Anteil jeweils D4 und geringe Anteile (< 500 ppm D6, D7, D8) sowie unvermeidliche Verunreinigungen ist. Die Größe "S" ist ein qualitatives Maß für die Homogenität und die Intensität der anhand der CT-Messung erfassten Schichtstruktur. Dabei setzt sich die Symbolik der qualitativen Bewertung wie folgt um:

- o "++" sehr gut,
- o "+" gut,
- o "0" akzeptabel,
- o "-" schlecht und
- o "--" sehr schlecht.

Die Einträge in der Tabelle verdeutlichen, dass vorteilhafterweise die Gewichtsverhältnisse mD3 zu mD5 in einem Bereich zwischen 0,1 bis 1 liegen sollten. Darüber hinaus haben die Messungen ergeben, dass die Summe der Gewichtsanteile der Komponenten mD3 und mD5 bevorzugt in einem Bereich zwischen 1 Gew.-% und 6 Gew.-% liegen sollten, um eine optimale Homogenität der Quarzglaskörper zu erzielen. Abweichungen von dem ausgewählten Bereich und/oder der ausgewählten Summe der Gewichtsanteile führen jeweils zu einer Reduktion der Homogenität des Quarzglases. Wie die Werte in der Tabelle 1 verdeutlichen, wird bei einer Zufügung der beiden Komponenten D3 und D5 mit einem Gesamtgewichtsanteil zwischen 2 Gew.-% und 6 Gew.-% Quarzglas erzielt, dessen Homogenität als sehr gut oder gut bezeichnet werden kann. Besonders herausgehoben war jene Probe, deren mD3/mD5 Verhältnis 0,5 betrug. Bei einem Gesamtanteil von 48000 ppm = 4,8 Gew.-% der Beimischungen durch die Zusatzkomponenten D3 und D4 in das Basismaterial D4 ergab sich ein Quarzglaszylinder, welche über die geringsten Dichteschwankungen verfügte.

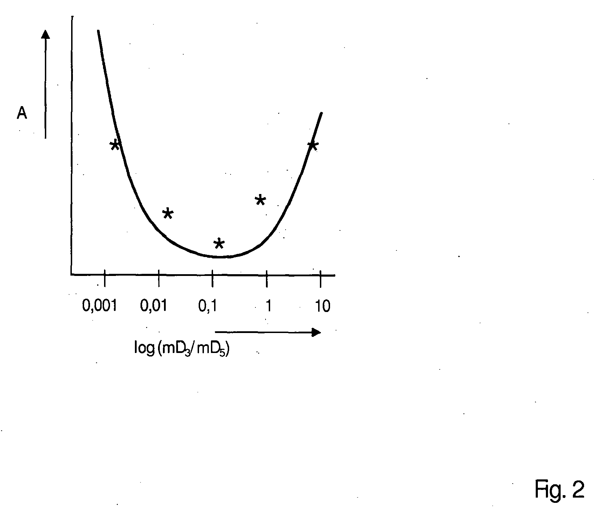

Die in Tabelle 1 aufgeführten Messergebnisse spiegeln sich auch im Diagramm von **Figur 2** wider. Auf der Ordinate ist die Anzahl "A" der Schichten im Sootkörper pro Längeneinheit (in cm) aufgetragen, wie sie aus den CT-Messungen ermittelt werden können, und auf der Abszisse das Verhältnis von mD3/mD5. Es ist ersichtlich, dass es bei einem mD3/mD5-Verhältnis um 0,5 ein optimales Ergebnis in Bezug auf Homogenität erzielt wird. Deutlich ist der einer quadratischen Funktion gehorchende Verlauf der Qualitätsgröße A bei Auftragung in halblogarithmischer Darstellung als Funktion des Gewichtsverhältnisses mD3/mD5zu erkennen. Nur innerhalb eines klar beschränkten Fensters lassen sich die erfindungsgemäßen Vorteile realisieren. Bei Variation der Gewichtsverhältnisse über den beanspruchten Bereich hinaus verliert sich der erfindungsgemäß ermittelte Vorteil.

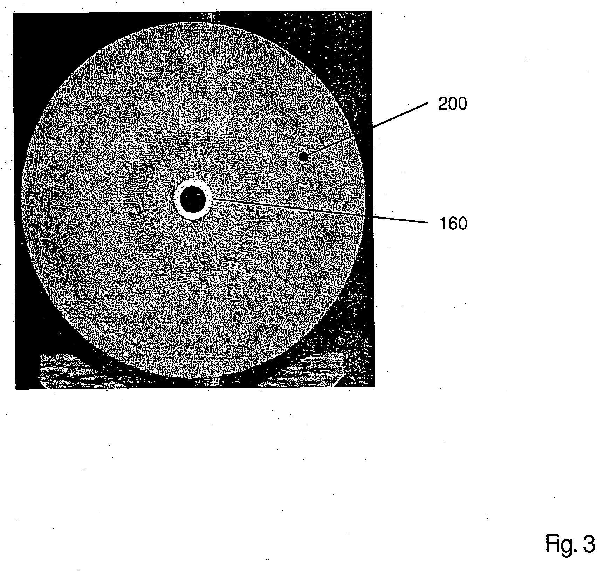

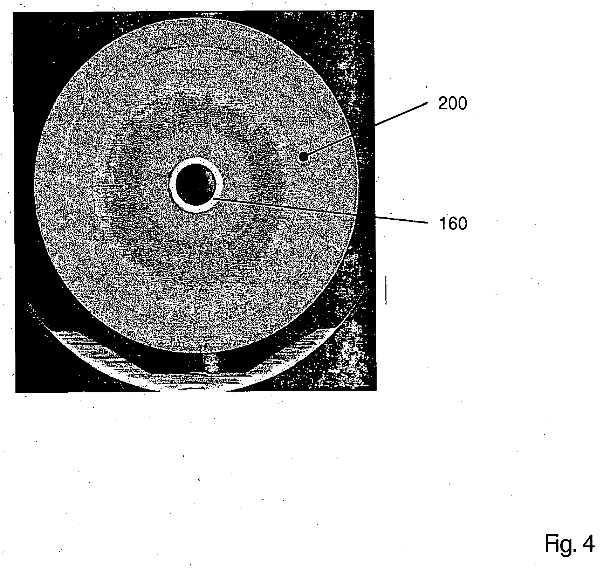

Die **Figuren 3 und 4** zeigen Schichtaufnahmen, die mittels Röntgencomputertomographischer Verfahren erstellt wurden. Zu sehen ist jeweils ein Querschnitt durch einen zylinderartig ausgestalteten Quarzglaskörper. Dabei erfolgt der Schnitt quer zur Längsachse des Quarzglaskörpers. Wie dargelegt, erfolgt das Abscheiden der amorphen SiO$_2$-Partikel auf einer Ablagerungsfläche. Diese Ablagerungsfläche ist in den beiden genannten Figuren 3 und 4 jeweils als weißer Ring in der Mitte der ansonsten gräulich dargestellten Quarzglaskörper. Die Ablagerung der SiO$_2$-Partikei erfolgt schichtweise unter Drehung der stabartig ausgebildeten Ablagerungsfläche.

Die CT-Aufnahme von Figur 3 zeigt das unter Einsatz eines SiO$_2$-Einsatzmaterials 105 gemäß Probe Nr. 5 aus Tabelle 1 hergestellte SiO$_2$-Sootrohr. Bei dieser Aufnahmetechnik sind Bereiche mit relativ hoher Dichte als helle Flächenbereiche dargestellt. Es ist erkennbar, dass die Dichte von Innen nach Außen gleichmäßig abnimmt. Radiale Schichten sind kaum zu erkennen. Im Vergleich dazu zeigt Figur 4 eine CT-Aufnahme eines anhand des Standes der Technik mit einem handelsüblichen Einsatzmaterial hergestellten Sootrohres. Anhand von Helligkeitsunterschieden sind radial verlaufende Sichten erkennbar. Der geringere Innendurchmesser bei der Probe gemäß Figur 4 ergibt sich durch den Einsatz eines Trägers mit geringerem Außendurchmesser beim Abscheideprozess zur Herstellung des SiO$_2$-Sootrohres. Durch die Nutzung von Röntgenstrahlung zur Sichtbarmachung des Querschnittes der Quarzglaskörper lassen sich insbesondere Dichtevariationen leicht und eindeutig erkennen. Es ist offensichtlich, dass der Quarzglaskörper, welcher nach bekannten Verfahren hergestellt wurde, eine Mehrzahl von konzentrisch aufgebauten Dichteschwankungsringen aufweist. Solcher Art Dichteschwankungen können insbesondere bei der Nutzung des Quarzglases für optische Fasern Nachteile haben.

Im Gegensatz dazu zeigt die Figur 3 deutlich, dass keine konzentrischen Ringe mehr vorhanden sind, die auf Dichteschwankungen hindeuten würden. So lässt schon eine optische Kontrolle der computertomographisch erstellen Bilder erkennen, dass durch die Nutzung eines Polysiloxangemisches, welches die beiden Zusatzkomponenten D3 und D5 in vorbestimmten Anteilen und Gewichtsverhältnissen enthält Quarzglaskörper erstellt werden können, die eine sehr gleichmäßige Homogenität aufweisen. Die gleichmäßige Homogenität des Quarzglases ist eine direkte Folge der homogenen Verteilung der SiO$_2$-Partikel im Sootkörper. Der Übergang vom SiO$_2$-Sootkörper zum synthetischen Quarzglas findet unter Zuführung von thermischer Energie statt im Rahmen dieses als Verglasen bezeichneten Verfahrensschrittes

werden im SiO$_2$-Sootkörper vorhandene Fehler oder Dichtevariationen in dem Quarzglas manifestiert. Durch die Nutzung zweier Zusatzkomponenten ergibt sich, wie dargelegt, eine Verbreiterung der Partikelgrößenverteilung. Somit kann die Varianz der Dichteschwankungen des Sootkörpers auf nur $\delta_{inv}$ = 0,023 % reduziert werden. Solcher Art homogene SiO$_2$-Sootkörper lassen sich dann in ebenfalls extrem homogene Quarzglaskörper durch Verglasen umwandeln.

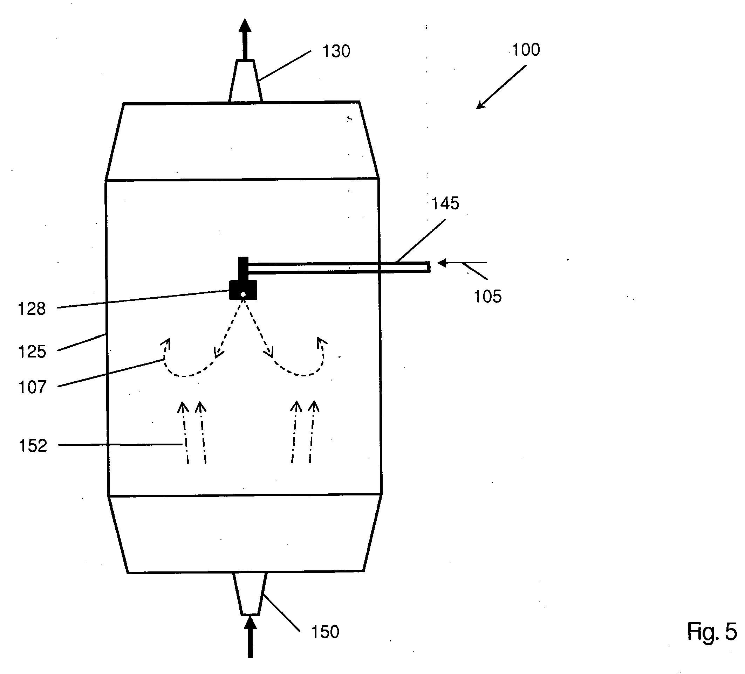

**Figur 5** zeigt das System 100 zur Herstellung von Quarzglas, welches das erfindungsgemäße Verfahren nutzt. Das System 100 weist dazu einen Vorratstank 110 auf, aus dem das flüssige SiO$_2$-Einsatzmaterial 105 mittels einer nicht dargestellten Pumpe in eine Vorheizeinrichtung 115 gepumpt wird. Mittels bekannter Verfahren wird das flüssige SiO$_2$-Einsatzmaterial 105 in der Vorheizeinrichtung 115 auf eine erhöhte Temperatur aufgeheizt. Nach Durchströmen der Vorheizeinrichtung 115 wird das flüssige SiO$_2$-Einsatzmaterial 105 in die Expansionskammer 125 des Verdampfers 120 herein gepumpt. Wie noch näher dargelegt wird, findet in der Expansionskammer 125 der Übergang des flüssigen SiO$_2$-Materials in den gasförmigen SiO$_2$-Einsatzdampf 107 statt. Über eine Leitung 130 strömt der SiO$_2$-Einsatzdampf 107 zu dem Brenner 140, wo eine pyrolytische oder hydrolytische Umsetzung des SiO$_2$-Einsatzdampfes in SiO$_2$-Partikel erfolgt.

Die Vorheizeinrichtung 115 weist einen Zulauf 116 und einen Ablauf 117 auf. Durch den Zulauf 116 wird das SiO$_2$-Einsatzmaterial 105 in der Vorheizvorrichtung 115 zugeführt. Innerhalb der Vorheizeinrichtung 115 findet eine Erwärmung des SiO$_2$-Einsatzmaterials 105 statt. Dieses kann durch die Verwendung eines Heißölsystems oder eines elektrischen Heizelementes in den Wänden der Vorheizeinrichtung erfolgen. Um eine gleichmäßige Aufheizung des flüssigen SiO$_2$-Einsatzmaterials 105 unter Vermeidung heißer Bereiche zu erzielen, hat es sich als vorteilhaft erwiesen, wenn die Vorheizeinrichtung 115 einen Strömungskanal aufweist, welcher von Heißölkanälen umgeben ist. Der so realisierbare flüssig-zu-flüssig Hitzetransfer erzielt eine gleichmäßige Erhitzung des flüssigen SiO$_2$-Einsatzmateriales 105. Diese Art der gleichmäßigen Erwärmung stellt sicher, dass es nicht zur temperaturbedingten chemischen Umsetzung der D3 oder der D5 Polyalkylsiloxane kommt. Das erhitzte flüssige SiO$_2$-Einsatzmaterial 105 wird von der Vorheizeinrichtung 115 in die Expansionskammer 125 durch eine Zuführungsleitung 145 abgegeben.

Die Expansionskammer 125 definiert ein Innenvolumen für die freie Ausdehnung des SiO$_2$-Einsatzdampfes. Um diese Verdampfung des flüssigen SiO$_2$-Einsatzmaterials in den gasförmigen Einsatzdampf zu erzielen, hat es sich als vorteilhaft erwiesen, wenn in der Vorheizeinrichtung 115 die Temperatur des flüssigenSiO$_2$-Einsatzmaterials über den Siedepunkt des SiO$_2$-Einsatzmaterials bei dem Betriebsdruck der Expansionskammer erhöht wird. Eine bevorzugte Betriebstemperatur für die Vorheizeinrichtung 115 beträgt ungefähr 220 °C. Der Siedepunkt von D4 bei Atmosphärendruck beträgt ungefähr 175°C. Um zu vermeiden, dass das flüssige SiO$_2$-Einsatzmaterial bei 220 °C siedet, ist ein Rückdruck in der Vorheizeinrichtung 115 von ca. 100 kPa erforderlich. Auf diese Weise wird der flüssige Reaktant als eine unterkühlte (komprimierte) Flüssigkeit in der Vorheizeinrichtung 115 gehalten.

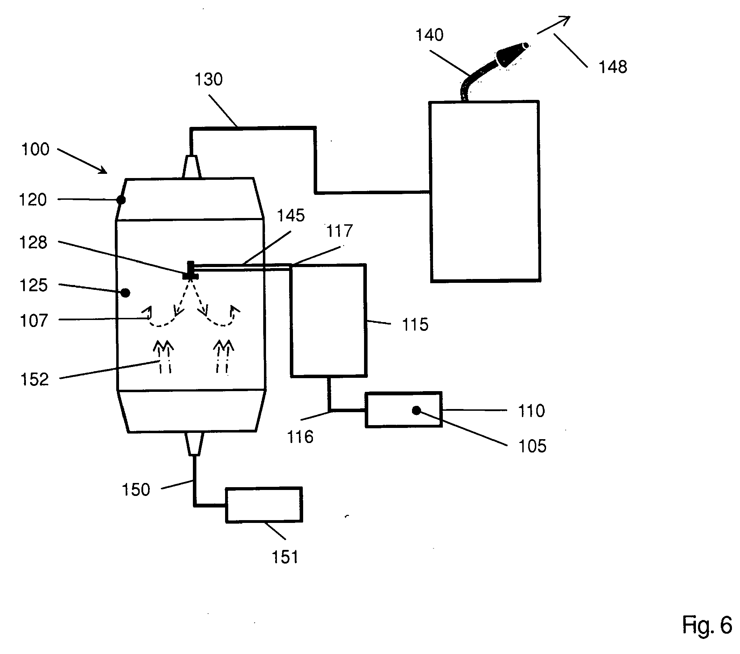

Wie die **Figur 6** verdeutlicht, fließt das flüssige SiO$_2$-Einsatzmaterial aus der Vorheizvorrichtung 115 durch die Zuführungsleitung 145 in den Innenraum der Expansionskammer 125. Die Vorheizeinrichtung 115 heizt das flüssige SiO$_2$-Einsatzmaterial 105 genügend auf, so dass dieser nahezu vollständig verdampft, während dessen Druck beim Eintreten in das Innenvolumen der Expansionskammer 125 abfällt. Eine solche sofortige Verdampfung findet nur dann statt, wenn die Vorheizeinrichtung 115 die Temperatur des flüssigen SiO$_2$-Einsatzmaterials über den Siedepunkt des SiO$_2$-Einsatzmaterials bei dem Betriebsdruck der Expansionskammer 125 erhöht hat. Die Menge des SiO$_2$-Einsatzmaterials 105, das sofort verdampft, hängt somit von der Heizmenge ab, die in der Vorheizeinrichtung 115 dem flüssigen SiO$_2$-Einsatzmaterials zugeführt wird.

Um eine besonders gleichmäßige und vollständige Verdampfung auch der hochsiedenden Anteile des SiO$_2$-Einsatzmaterials zu erzielen, ist es vorteilhaft, wenn zusätzlich ein erwärmtes, gasförmiges Verdünnungsmittel in die Kammer eingeführt wird. Das erfindungsgemäß genutzte SiO$_2$-Einsatzmaterial weist eine Mehrzahl von Polyalkylsiloxanen, insbesondere D3, D4 und D5 auf. Jedes der genannten Polyalkylsiloxane weist eine unterschiedliche Siedetemperatur auf. Um die Gewichtsverhältnisse der Zusatzkomponenten D3, D5 nicht zu verändern, ist es wichtig, dass eine gleichmäßige Verdampfung des SiO$_2$-Einsatzmaterials stattfindet. Dazu ist es notwendig, dass die zugeführte Hitzemenge sowie die zugeführte Menge an Verdünnungsmittel derart groß ist, dass auch D5, welches die höchste Siedetemperatur aufweist, verdampfen kann. In der Vorheizeinrichtung 115 wird dem SiO$_2$-Einsatzmaterial Wärme zugeführt, um es zu erhitzt. Bei Temperaturen von ca. 250°C kann es aber ggf. zu Gelbildungen bei den hochsiedenden Polyalkylsiloxanen D7, D8 oder D9 kommen. Um jene hochsiedenden Elemente nicht zur Bildung von Gelen zu veranlassen, ist es vorteilhaft, wenn im Rahmen des Verdampfungsprozesses ein Verdünnungsmittel 152, vorzugsweise ein gasförmiges und auf die gewünschte Verdampfungstemperatur erhitztes Verdünnungsmittel zugeführt wird. Dazu kann durch eine entsprechende Medienleitung 150 das gasförmige Verdünnungsmittel 152 aus einen Vorratsbehälter 151 in die Expansionskammer 125 einströmen.

Als Verdünnungsmittel 152 hat sich insbesondere Stickstoff als vorteilhaft erwiesen. Andere Verdünnungsmittel, wie beispielsweise Argon oder Helium, können ebenfalls verwendet werden, wenn dieses erwünscht ist. Hierbei handelt es sich um Gase, die sich in Bezug auf Polyalkylsiloxane inert verhalten, so dass Oxidations-, Polymerisations- oder Zersetzungsreaktionen zwischen der Flüssigkeit und dem Trägergas, insbesondere unter Druck und höherer Temperatur, und damit eine nicht reproduzierbare Veränderung der Zusammensetzung des Einsatzmaterials vermieden werden.

Durch das Hinzuführen des Verdünnungsmittels wird der Partialdruck des flüssigen $SiO_2$-Einsatzmaterials in der Expansionskammer 125 vermindert und so dessen Taupunkt erniedrigt. Dadurch bedarf es keiner hohen Erhitzung des $SiO_2$-Einsatzmaterials in der Vorheizeinrichtung 115. Vielmehr reichen Temperaturen zwischen 150°C und 230°C aus, um eine vollständige Umsetzung des $SiO_2$-Einsatzmaterials in den $SiO_2$-Einsatzdampf sicherzustellen. Ziel ist es dabei, dass das Verdampfen des $SiO_2$-Einsatzmaterials eine Injektionsphase umfasst, in der das Einsatzmaterial in flüssiger Form in feine Tröpfchen zerstäubt wird, und eine Verdampfungsphase, in der die feinen Tröpfchen durch Kontakt mit einem heißen Trägergas, aber ohne Kontakt mit Wandungen, große Oberfläche schnell und effizient vollständig verdampft wird.

Die Fig. 6 verdeutlicht die erfindungsgemäße Verdampfung. Das aufgeheizte $SiO_2$-Einsatzmaterial 105 wird durch die Zuführungsleitung 145 der Expansionskammer 125 zugeführt. Am Ende der Zuführungsleitung 145 im Inneren der Expansionskammer 125 weist die Zuführungsleitung 145 einen düsenartigen Zerstäuberdüse 128 auf. Mittels der Zerstäuberdüse 128 wird das tlüssige $SiO_2$-Einsatzmaterial 105 in feine Tropfen zerstäubt, welche einen mittleren Durchmesser von weniger als einem $\mu m$, bevorzugt zwischen 0,5 $\mu m$ und 20 nm ($d_{50}$-Wert) aufweisen. Durch den Druckabfall, der beim Austritt aus der Zerstäuberdüse 128 auftritt wird ein wesentlicher Teil des flüssigen Einsatzmaterials in die Gasphase überführt. Zusätzlich wird durch die Medienleitung 150 ein auf ca. 200°C bis ca. 230°C vorgewärmter Stickstoffstrom in die Expansionskammer 125 geleitet. Vorteilhafterweise weist der Stickstoffstrom eine Temperatur auf, die im Wesentlichen - also auf +/- 10°C - der Temperatur des flüssigen $SiO_2$-Einsatzmaterials 105 entspricht. Erfindungsgemäß strömt der Stickstoffstrom der Sprührichtung des flüssigen $SiO_2$-Einsatzmaterials 105 entgegen, um so eine starke Vermischung und eine ausreichende Wärmeübertragung sicherzustellen. Durch die Kombination der beiden Verdampfungsprinzipien - Druckabfall sowie Verdampfung durch den gasförmigen Stickstoff - findet eine vollständige Umsetzung des flüssigen $SiO_2$-Einsatzmaterials 105 in den gasförmigen $SiO_2$-Einsatzdampf 107 statt. Es ist nicht vorgesehen, dass sich Teile des flüssigen $SiO_2$-Einsatzmaterials 105 an den Wänden der Expansionskammer 125 niederschlagen und/oder dort thermisch verdampft werden. Durch die Leitung 130 findet der Abfluss des gasförmigen $SiO_2$-Einsatzdampfes 107 zu dem Brenner 140 statt. Im Brenner 140 wird der $SiO_2$-Einsatzdampfes 107 durch Pyrolyse, Oxidation oder Hydrolyse zu $SiO_2$-Partikel 148 - auch als $SiO_2$ oder Soot oder $SiO_2$-Soot bezeichnet - umgesetzt.

Das Größenspektrum der Tröpfchen hängt von einer Vielzahl an Einflussgrößen ab. Neben den rheologischen Eigenschaften der Flüssigkeit und der Geometrie der Zerstäubungsdüse 128 ist dies insbesondere die Austrittsgeschwindigkeit der Flüssigkeit aus der Zerstäubungsdüse, die im Wesentlichen von der Druckdifferenz bestimmt wird. Innerhalb des genannten Druckdifferenzbereichs zerfällt der austretende Flüssigkeitsstrahl aufgrund turbulenter Strömung zu feinen Tropfen mit enger Tropfengrößenverteilung.

Bei einer anderen Verfahrensvariante ist vorgesehen, dass das Bilden des Stroms des $SiO_2$- Einsatzmaterials ein Erzeugen eines ersten Gasstroms durch Verdampfen einer Mischung von Polyalkylsiloxanen umfasst, die reines D4 enthält, und ein Erzeugen eines zweiten Gasstroms durch Verdampfen einer zweiten Mischung von Polyalkylsiloxanen, die im Wesentlichen D3, D4 und D5 enthält, sowie ein Zusammenführen der Gasströme vor oder während Verfahrensschritt (C). Durch den Einsatz separater Verdampfer für unterschiedliche Komponenten des Einsatzmaterials können die Verdampfungsparameter, wie Verdampfungstemperatur und Verdampfungsrate, individuell an die zu verdampfenden Komponenten angepasst und optimiert werden.

Wie dargelegt, ist es Ziel des erfindungsgemäßen Verfahrens, dass das aus einer Mehrzahl von Polyalkylsiloxanen aufgebaute flüssige $SiO_2$-Einsatzmaterial vollständig in die Gasphase überführt wird, und dabei die Gewichtsverhältnisse der Zusatzkomponenten D3 und D5 beibehält. Überraschenderweise entsteht durch die Addition der Zusatzkomponenten D3 und D5 in eine D4-Flüssigkeit ein $SiO_2$-Einsatzmaterial, mittels dem besonders homogene $SiO_2$-Sootkörper aufgebaut werden können. Vorteilhafterweise weist dabei das D4-Ausgangsmaterial nur eine Verunreinigung von weniger als 500 ppm auf, wobei als Verunreinigung insbesondere alle Polyalkylsiloxane verstanden werden, die nicht D3, D4 oder D5 sind.

Bezugszeichenliste

| | |
|---|---|
| 100 | System |
| 105 | $SiO_2$-Einsatzmateriat |
| 107 | $SiO_2$-insatzdampf |
| 110 | Vorratstank / Vorratsbehälter |
| 115 | Vorheizeinrichtung |
| 116 | Zulauf |
| 117 | Ablauf |
| 120 | Verdampfer / Verdampfersystem |
| 122 | Flüssigkeitspumpe |

123    Durchflussmessgerät
124    MFC (mass flow controller)
125    Expansionskammer / Verdampfungskammer
126    Leitung
128    Zerstäuberdüse
130    Leitung
140    Brenner / Flammhydrolysebrenner
141    Brennerblock
142    Bewegung von 140
143    Brennerflamme
145    Zuführungsleitung
148    SiO$_2$-Soot
150    Medienleitung
151    Vorratsbehälter
152    Verdünnungsmittel
160    Ablagerungsfläche / Trägerrohr
161    Längsachse von 160
200    Sootkörper

**Patentansprüche**

1.    Verfahren zur Herstellung von synthetischem Quarzglas, umfassend die Verfahrensschritte:

(A) Bereitstellen eines flüssigen SiO$_2$-Einsatzmaterials (105), welches mehr als 60 Gew.-% des Polyalkylsiloxans Octa methylcyclotetrasiloxan D4 aufweist,
(B) Verdampfen des flüssigen SiO$_2$-Einsatzmaterials (105) in einen gasförmigen SiO$_2$ Einsatzdampf (107),
(C) Umsetzen des SiO$_2$-Einsatzdampfes (107) zu SiO$_2$ Partikeln,
(D) Abscheiden der SiO$_2$ Partikel auf einer Ablagerungsfläche (160) unter Bildung eines SiO$_2$ Sootkörpers (200),
(E) Verglasen des SiO$_2$-Sootkörpers unter Bildung des synthetischen Quarzglases,

**dadurch gekennzeichnet, dass**
das flüssige SiO$_2$-Einsatzmaterial (105) wenigstens eine Zusatzkomponente aus dem Polyalkylsiloxan Hexamethylcyclotrisiloxan D3 mit einem Gewichtsanteil mD3 und eine Zusatzkomponente aus dem Polyalkylsiloxan Dekamethylcyclopentasiloxan D5 mit einem Gewichtsanteil mD5 in einem Gewichtsverhältnis mD3/mD5 in einem Bereich zwischen 0,01 und 1 aufweist, und
das bereitgestellte, flüssige SiO$_2$-Einsatzmaterial (105) unter Beibehaltung des Gewichtsverhältnis mD3/mD5 und zu mindestens 99 Gew.-% in den gasförmigen SiO$_2$-Einsatzdampf (107) verdampft wird.

2.    Verfahren nach Anspruch 1, **dadurch gekennzeichnet, dass** das Verhältnis mD3/mD5 im Bereich zwischen 0,1 und 0,5 liegt.

3.    Verfahren nach einem der vorhergehenden Ansprüche 1 oder 2, **dadurch gekennzeichnet, dass** ein Verhältnis $\tau$ des Gewichtsverhältnis G_liquid=mD3/mD5 des flüssigen SiO$_2$-Einsatzmaterials (105) und des Gewichtsverhältnis G_vapor =mD3/mD5 des gasförmigen SiO$_2$- Einsatzdampfs (107) eine Größe von maximal $\pm$ 500 ppm, bevorzugt maximal $\pm$ 250 ppm, besonders bevorzugt maximal $\pm$ 100 ppm aufweist, wobei das Verhältnis wie folgt berechnet wird:

$$\tau = (G\_liquid - G\_vapor)/G\_liquid.$$

4.    Verfahren nach einem der vorhergehenden Ansprüche, **dadurch gekennzeichnet, dass** die Zusatzkomponente D3 und/oder die Zusatzkomponente D5 zwischen 0,5 Gew.-% und 30 Gew.-% eines Gesamtgewichtes des flüssigen SiO$_2$-Einsatzmaterials (105) stellen, insbesondere die Summe der Gewichtsanteile mD3 + mD5 im Bereich zwischen 1 und 15 Gew.-%, bevorzugt zwischen 1 und 3 Gew.-% liegt.

5.    Verfahren nach einem der vorhergehenden Ansprüche, **dadurch gekennzeichnet, dass** die Zusatzkomponenten Polyalkylcyclosiloxane und jeweils deren lineare Homologen in folgenden Mengen umfassen:

- Hexamethylcyclotrisiloxan (D3): Gewichtsanteil mD3 im Bereich zwischen 0,02 Gew.-% und 1 Gew.-%,
- Dekamethylcyclopentasiloxan (D5) Gewichtsanteil mD5 im Bereich zwischen 0,5 Gew.-% und 5 Gew.-%.

6. Verfahren nach wenigstens einem der vorhergehenden Ansprüche, **dadurch gekennzeichnet, dass** das Verdampfen die Schritte umfasst:

- Erhitzen des $SiO_2$-Einsatzmaterials (105),
- Einführen des erhitzten $SiO_2$-Einsatzmaterials (105) in eine Expansionskammer (125), so dass zumindest ein erster Teil des $SiO_2$- Einsatzmaterials (105) in Folge eines Druckabfalls verdampft.

7. Verfahren nach wenigstens einem der vorhergehenden Ansprüche, **dadurch gekennzeichnet, dass** das Verdampfen die Schritte umfasst:

- Erhitzen des $SiO_2$-Einsatzmaterials (105),
- Einführen des erhitzten $SiO_2$-Einsatzmaterials (105) in eine Expansionskammer (125),
- Vermischen des $SiO_2$-Einsatzmaterials (105) mit einem erhitzten Verdünnungsmittel (152), so dass zumindest ein zweiter Teil des $SiO_2$-Einsatzmaterials (105) in Folge einer Senkung des Taupunktes verdampft.

8. Verfahren nach einem der Ansprüche 6 oder 7, **dadurch gekennzeichnet, dass** das $SiO_2$-Einsatzmaterial (105) infolge des Druckabfalls und/oder der Senkung des Partialdruckes zu mindestens 99,95 Gew.-%, bevorzugt 99,9995 Gew.-% in den $SiO_2$-Einsatzdampf (107) überführt wird.

9. Verfahren nach wenigstens einem der vorhergehenden Ansprüche, **dadurch gekennzeichnet, dass** das Einführen des erhitzten $SiO_2$-Einsatzmaterials (105) in der Expansionskammer (125) eine Injektionsphase umfasst, in der das $SiO_2$-Einsatzmaterial (105) in flüssiger Form in feine Tröpfchen zerstäubt wird, wobei die Tröpfchen einem mittleren Durchmesser von weniger als 5 $\mu$m, vorzugsweise weniger als 2 $\mu$m, aufweisen.

**Claims**

1. A method for producing synthetic quartz glass, comprising the steps of:

   (A) providing a liquid $SiO_2$ feedstock material (105), which contains more than 60% by wt. of the polyalkylsiloxane D4,
   (B) vaporizing the liquid $SiO_2$ feedstock material (105) into a gaseous $SiO_2$ feedstock vapor (107),
   (C) converting the $SiO_2$ feedstock vapor (107) into $SiO_2$ particles,
   (D) depositing the $SiO_2$ particles on a deposition surface (160) while forming a $SiO_2$ soot body (200),
   (E) vitrifying the $SiO_2$ soot body (200) while forming the synthetic quartz glass,

   **characterized in that**
   the liquid $SiO_2$ feedstock material (105) contains at least one additional component of the polyalkylsiloxane hexamethylcyclotrisiloxane D3 with a weight fraction mD3 and an additional component of the polyalkylsiloxane decamethylcyclopentasiloxane D5 with a weight fraction mD5 in a weight ratio mD3/mD5 in a range between 0.01 and 1, and the liquid $SiO_2$ feedstock material (105) provided is vaporized while maintaining the weight ratio mD3/mD5 and at at least 99% by wt. into the gaseous $SiO_2$ feedstock vapor (107).

2. The method according to claim 1, **characterized in that** the ratio mD3/mD5 is in the range between 0.1 and 0.5.

3. The method according to any one of the preceding claims 1 or 2, **characterized in that** a ratio $\tau$ of the weight ratio G_liquid=mD3/mD5 of the liquid $SiO_2$ feedstock material (105) and of the weight ratio G_vapor =mD3/mD5 of the gaseous $SiO_2$ feedstock vapor (107) has a value of not more than $\pm$ 500 ppm, preferably not more than $\pm$ 250 ppm, particularly preferably not more than $\pm$ 100 ppm, the ratio being calculated as follows:

$$\tau = (G\_liquid - G\_vapor)/G\_liquid.$$

**4.** The method according to any one of the preceding claims, **characterized in that** the additional component D3 and/or the additional component D5 make up between 0.5% by wt. and 30% by wt. of a total weight of the liquid $SiO_2$ feedstock material (105), particularly the sum of the weight fractions mD3 + mD5 is in the range between 1% by wt. and 15% by wt., preferably between 1 % by wt. and 3% by wt.

**5.** The method according to any one of the preceding claims, **characterized in that** that the additional components comprise polyalkylcyclosiloxanes and their respective linear homologs in the following amounts:

• hexamethylcyclotrisiloxane (D3): weight fraction mD3 in the range between 0.02% by wt. and 1 % by wt.,
• decamethylcyclopentasiloxane (D5): weight fraction mD5 in the range between 0.5% by wt. and 5% by wt.

**6.** The method according to any one of the preceding claims, **characterized in that** vaporizing comprises the steps of:

• heating the $SiO_2$ feedstock material (105),
• introducing the heated $SiO_2$ feedstock material (105) into an expansion chamber (125), so that at least a first part of the $SiO_2$ feedstock material (105) vaporizes due to a pressure drop.

**7.** The method according to at least one of the preceding claims, **characterized in that** vaporizing comprises the steps of:

• heating the $SiO_2$ feedstock material (105),
• introducing the heated $SiO_2$ feedstock material (105) into an expansion chamber (125),
• mixing the $SiO_2$ feedstock material (105) with a heated diluent (152), so that at least a second part of the $SiO_2$ feedstock material (105) vaporizes due to a decrease in the dew point.

**8.** The method according to any one of claims 6 or 7, **characterized in that** the $SiO_2$ feedstock material (105) is converted due to the pressure drop and/or the reduction of the partial pressure at at least 99.95% by wt., preferably 99.9995% by wt., into the $SiO_2$ feedstock vapor (107).

**9.** The method according to at least one of the preceding claims, **characterized in that** introducing the heated $SiO_2$ feedstock material (105) into the expansion chamber (125) comprises an injection phase in which the $SiO_2$ feedstock material (105) is atomized in liquid form into fine droplets, the droplets having a mean diameter of less than 5 $\mu$m, preferably of less than 2 $\mu$m.

**Revendications**

**1.** Procédé pour la fabrication de verre de quartz, comprenant les étapes de procédé :

(A) préparation d'un matériau liquide de $SiO_2$ (105), qui présente plus de 60 % en poids de polyalkylsiloxane octaméthylecyclotétrasiloxane D4,
(B) évaporation du matériau liquide $SiO_2$ (105) en une vapeur gazeuse de $SiO_2$(107),
(C) transformation de la vapeur de $SiO_2$(107) en particules de de $SiO_2$,
(D) précipitation des particules de $SiO_2$ sur une surface de dépôt en formant un corps de suie de $SiO_2$ (200),
(E) vitrification du corps de suie $SiO_2$ en formant un verre de quartz synthétique,

**caractérisé en ce**
**que** le matériau liquide de $SiO_2$ (105) présente au moins un composant supplémentaire du polyalkylsiloxane héxaméthylecyclotétrasiloxane D3 avec une part pondérale mD3 et un composant supplémentaire du décaméthylecyclotétrasiloxane D5 avec une part pondérale mD5 dans un rapport pondéral mD3/mD5 compris entre 0,01 et 1, et **que** le matériau liquide de $SiO_2$ (105) préparé est évaporé à au moins 99 % en poids en vapeur gazeuse de $SiO_2$ (107) tout en conservant le rapport pondéral mD3/mD5.

**2.** Procédé selon la revendication 1, **caractérisé en ce que** le rapport mD3/mD5 est compris entre 0,1 et 0,5.

**3.** Procédé selon l'une des revendications précédentes 1 ou 2, **caractérisé en ce qu'**un rapport pondéral T du rapport pondéral G_liquid=mD3/mD5 du matériau liquide de $SiO_2$ (105) et le rapport pondéral Gvapor=mD3/mD5 de la vapeur gazeuse de $SiO_2$ (107) présente une grandeur maximale de $\pm$ 500 ppm, de préférence maximal $\pm$ 250

ppm, particulièrement de préférence ± 100 ppm, le rapport étant calculé comme suit :

$$\tau = (G\text{-liquid} - G\_vapor)G\_liquid.$$

4. Procédé selon l'une des revendications précédentes, **caractérisé en ce que** le composant supplémentaire D3 et/ou le composant supplémentaire D5 représente dans le poids total du matériau liquide de $SiO_2$ (105) entre 0,5 et 30 % en poids, en particulier la somme des parts pondérales mD3 + mD5 étant comprise entre 1 et 15 % de préférence entre 1 et 3 % en poids

5. Procédé selon l'une des revendications précédentes, **caractérisé en ce que** le composant supplémentaire de héxaméthylecyclotétrasiloxane et respectivement ses homogènes linéaires comprennent ces éléments dans les quantités suivantes :

   • héxaméthylecyclotétrasiloxane (D3) : part pondérale mD3 comprise entre 0,5 et 1 % en poids,
   • décaméthylecyclotétrasiloxane (D5) : part pondérale mD5 comprise entre 0,5 et 5 % en poids.

6. Procédé selon l'une des revendications précédentes, **caractérisé en ce que** l'évaporation comprend les étapes suivantes :

   • chauffage du matériau liquide de $SiO_2$ (105),
   • introduction du matériau liquide de $SiO_2$ (105) dans une chambre d'expansion (125) de sorte qu'au moins une première partie du matériau liquide de $SiO_2$ (105) s'évapore à la suite d'une chute de pression.

7. Procédé selon l'une des revendications précédentes, **caractérisé en ce que** l'évaporation comprend les étapes suivantes :

   • chauffage du matériau liquide de $SiO_2$ (105),
   • introduction du matériau liquide de $SiO_2$ (105) dans une chambre d'expansion (125),
   • mélange du matériau liquide de $SiO_2$ (105) avec un diluant chauffé (152) de sorte qu'une seconde partie du matériau liquide de $SiO_2$ (105) s'évapore à la suite d'une réduction du point de rosée.

8. Procédé selon l'une des revendications 6 ou 7, **caractérisé en ce que** le matériau liquide de $SiO_2$ (105) est transformé en vapeur gazeuse de $SiO_2$ (107) à la suite de la chute de pression et/ou de la réduction de la pression partielle à au moins 99,95 % en poids, de préférence 99,9995 % en poids.

9. Procédé selon l'une des revendications précédentes, **caractérisé en ce que** l'introduction du matériau liquide de $SiO_2$ (105) dans la chambre d'expansion (125) comprend une phase d'injection dans laquelle le matériau liquide de $SiO_2$ (105) est pulvérisé sous forme liquide en fines gouttelettes, les gouttelettes présentant un diamètre moyen inférieur à 5 $\mu$m, de préférence inférieur à 2 $\mu$m.

Fig. 1

EP 2 782 880 B1

EP 2 782 880 B1

Fig. 2

log (mD₃/mD₅)

A

23

Fig. 3

Fig. 4

Fig. 5

Fig. 6

EP 2 782 880 B1

**EP 2 782 880 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5043002 A
- DE 102007024725 A1
- DE 4204406 A1
- EP 673888 A1
- EP 463045 A1
- US 5879649 A
- DE 10302914 A1
- EP 908418 A1
- DE 19501733 A1
- US 5356451 A1
- DE 2435704 A1